# EUROPEAN PATENT APPLICATION

(11) **EP 2 330 590 A1**
(43) Date of publication of application: **08.06.2011**
(21) Application number: 09817496.4
(22) Date of filing: 30.09.2009
(51) Int. Cl.: G11B 20/10, H04N 5/85, H04N 5/91

(54) **REPRODUCTION DEVICE**

(30) Priority: 01.10.2008 JP 2008256653; 01.10.2008 JP 2008256654
(71) Applicant: Panasonic Corporation, Kadoma-shi Osaka 571-8501 (JP)
(72) Inventor: TANAKA, Keiichi, Osaka 540-6207 (JP); YAMASHITA, Ken, Osaka 540-6207 (JP)
(74) Representative: Grünecker, Kinkeldey, Stockmair & Schwanhäusser Anwaltssozietät
(86) International application number: PCT/JP2009/005049
(87) International publication number: WO 2010/038455

(57) **Abstract**

In conventional managed copy, files are copied to the copy destination, while maintaining the file structure of the copy source. A problem pertaining to the conventional managed copy is that, when a partial copy, which changes the file structure of the copy source, is performed, the created disc does not conform to the standard and thus cannot be played back by the playback device.

In the playback device of the present invention, a managed copy control unit 423 includes a mapping data processing unit 609, and in the case of a partial copy, copies a file to the copy destination disc 802 by changing its file name to a file name for use in the copy destination disc 802. With this structure, it is possible to create a disc that conforms to the standard and can be played back by the playback device.

## Description

### [Technical Field]

The present invention relates to a playback device for playing back image data recorded on a recording medium such as a BD-ROM (Blu-Ray Disc Read-Only Memory), and in particular to a technology for recording image data recorded on a recording medium onto another recording medium (managed copy).

### [Background Art]

The managed copy is a technology applied to the case where a digital stream or an application program (hereinafter referred to as "application") is to be copied from a read-only recording medium such as a BD-ROM to a readable/writable recording medium such as an optical disc (BD-R, BD-RE, DVD-R, DVD-RW, DVD-RAM or the like), a hard disk, or a removable medium (SD memory card, memory stick, CompactFlash^{™}, SmartMedia, multimedia card or the like). The managed copy does not permit copies unlimitedly, but performs a communication with a server before the copy, performs authentication, and causes only permitted copies to be executed.

This technology allows for controls such as imposing a restriction on the number of backups (copies), and permitting backups only when they are to be billed, thus improving the usability in the BD-ROM viewing.

Conventional technologies of the managed copy include a technology recited in the following patent literature.

### [Citation List]

### [Patent Literature]

[Patent Literature 1]
   Japanese Patent Application Publication No. 2008-98765

### [Summary of Invention]

### [Technical Problem]

The managed copy is a mechanism in which only permitted copies are executed, and there are various methods for specifying a certain piece of data on the BD-ROM as a target of the copy.

For example, with respect to the case where a copy is to be made from a BD-ROM on which a main feature image and a bonus image are recorded, one method is to generate a backup that is composed of completely the same data as the data on the BD-ROM, and another method is to copy only a part of the data on the BD-ROM desired by the user (for example, only the bonus image).

The managed copy is executed based on a copy management information list which is a list of file names of the copy-target files. The copy management information list to be used may be preliminarily recorded on the disc, or may be a latest one obtained from the server.

When it is specified in the copy management information list that the copy target is all of the files recorded on the BD-ROM, all the files are copied by the managed copy. In that case, the disc structure conforming to the BD playback standard is copied as it is, thus it is guaranteed that a disc conforming to the BD playback standard is generated.

However, in the case of a partial copy, the compatibility regarding the BD playback standard may be lost. The reason for this is as follows. When only the bonus image is copied by the managed copy from the BD-ROM on which the main feature image and the bonus image are recorded, the main feature image is not copied. In that case, the compatibility with the database file or application on the BD-ROM may be damaged.

The BD-ROM also stores a scenario database file specifying streams that are each to be played back when a disc is inserted or a button is pressed. The scenario database file is stored in a specific location, with a fixed file name defined in the BD-ROM disc standard so that the playback devices can reference the scenario database when the disc is inserted therein.

Suppose that the scenario database file recorded on the copy-source BD-ROM is programmed to play back the main feature image at the disc's start. Then, when the copy-destination uses the same scenario database file as the copy-source BD-ROM, an unexpected operation may occur due to the lack of the main feature image that is to be played back at the disc's start. This is a serious problem. Other than this, many patterns of incompatibility may be generated depending on the mismatch between files caused by the lack of a part of the files.

It is therefore an object of the present invention to provide a playback device that can generate a disc that maintains playback compatibility even when a partial copy is performed.

### [Solution to Problem]

One aspect of the present invention for fulfilling the above-described object is a playback device for copying files from a first recording medium to a second recording medium, the first recording medium storing an index table file, real data files associated with titles defined in the index table file, and a partial-copy index table file that defines one or more titles in association with a partial set of the real data files, the playback device comprising: a storage unit storing file mapping information which indicates predetermined file names of the partial-copy index table file and the partial set of the real data files, the predetermined file names prepared for use in the second recording medium; a mapping data processing unit operable, when part of files recorded on the first recording medium is to be copied, to change file names of the partial-copy index table file and the partial set of the real data files to the predetermined file names indicated by the file mapping information; and a copy execution unit operable to copy the partial-copy index table file and the partial set of the real data files to the second recording medium, by attaching thereto the respective predetermined file names prepared for use in the second recording medium.

### [Advantageous Effects of Invention]

According to the present invention, even in the case of what is called a "partial copy" in which a partial set of the files recorded on the first recording medium is copied to the second recording medium by changing the file structure, the file names of the copy-target files are converted into the predetermined file names for use in the second recording medium by using the file mapping information, and the files with the predetermined file names after the conversion are recorded on the second recording medium by the copy. This makes it possible to create the second recording medium that maintains the playback compatibility.

### [Brief Description of Drawings]

Fig. 1 is a system diagram in Embodiment 1 of the present invention.
Fig. 2 is a data structure diagram of the BD-ROM in Embodiment 1 of the present invention.
Fig. 3 is a diagram showing a layer model of the software which is the target of the BD-ROM in Embodiment 1 of the present invention.
Fig. 4A and 4B are diagrams showing movie works created by the dynamic playback control in the two modes in Embodiment 1 of the present invention.
Fig. 5 is a diagram showing the internal structure of the playback device in Embodiment 1 of the present invention.
Fig. 6 is a diagram showing the directory structure of the local storage in Embodiment 1 of the present invention.
Fig. 7 is a diagram showing a detailed structure of the BD-J module in Embodiment 1 of the present invention.
Fig. 8 is a diagram showing the correspondence between index.bdmv and titles in Embodiment 1 of the present invention.
Fig. 9 is a diagram showing the internal structure of the managed copy control unit in Embodiment 1 of the present invention.
Fig. 10 is a diagram showing a data transmission/reception performed between the Java^{™} application and the server in Embodiment 1 of the present invention.
Fig. 11 is a diagram showing one example of the copy management information list in Embodiment 1 of the present invention.
Figs. 12A through 12D are diagrams showing examples of the screens indicating procedures of the managed copy in Embodiment 1 of the present invention.
Fig. 13 is a flowchart of the managed copy control performed by the Java application in Embodiment 1 of the present invention.
Fig. 14 is a flowchart of the data copy performed by the managed copy control unit in Embodiment 1 of the present invention.
Fig. 15 is a diagram showing an example of a screen displayed when the data copy is completed in Embodiment 1 of the present invention.
Fig. 16 is a diagram showing the copy management information list in the conventional technology.
Fig. 17 is a diagram showing one example of the copy destination disc after the managed copy in the conventional technology.
Fig. 18 is a diagram showing one example of a screen displayed when the copy destination disc of the managed copy is played back in the conventional technology.
Fig. 19 is a diagram showing one example of the copy destination disc after the managed copy in Embodiment 1 of the present invention.
Fig. 20 is a diagram showing one example of a screen displayed when the copy destination disc of the managed copy is played back in Embodiment 1 of the present invention.
Fig. 21 is a diagram showing one example of the copy management information list in Embodiment 2 of the present invention.
Fig. 22 is a diagram showing the internal structure of the managed copy control unit in Embodiment 2 of the present invention.
Fig. 23 is a flowchart showing the procedure of a data copy performed by the managed copy control unit in Embodiment 2 of the present invention.
Fig. 24 is a diagram showing one example of the copy destination disc after the managed copy in Embodiment 2 of the present invention.
Fig. 25 is a diagram showing one example of the copy management information list in Embodiment 3 of the present invention.
Fig. 26 is a diagram showing the internal structure of the managed copy control unit in Embodiment 3 of the present invention.
Fig. 27 is a flowchart showing the procedure of a data copy performed by the managed copy control unit in Embodiment 3 of the present invention.
Fig. 28 is a diagram showing one example of the copy destination disc after the managed copy in Embodiment 3 of the present invention.
Fig. 29 is a diagram showing the internal structure of the playback device in Embodiment 4 of the present invention.
Fig. 30 is a diagram showing the directory structure of the local storage in Embodiment 4 of the present invention.
Figs. 31A and 31B are diagrams showing the internal structure of the merge management information in Embodiment 4 of the present invention.
Fig. 32 is a diagram showing a detailed structure of the BD-J module in Embodiment 4 of the present invention.
Fig. 33 is a flowchart showing the procedure after an insertion of the BD-ROM in Embodiment 4 of the present invention.
Fig. 34 is a flowchart showing the procedure of re-building the virtual package when switching between titles is performed in Embodiment 4 of the present invention.
Fig. 35 is a diagram showing the virtual package update process in Embodiment 4 of the present invention.
Fig. 36 is a diagram showing the internal structure of the managed copy control unit in Embodiment 4 of the present invention.
Fig. 37 is a diagram showing data transmissions/ receptions between the Java application and the server in Embodiment 4 of the present invention.
Fig. 38 is a diagram showing one example of the copy management information list in Embodiment 4 of the present invention.
Figs. 39A through 39D are diagrams showing examples of the screens indicating procedures of the managed copy in Embodiment 4 of the present invention.
Fig. 40 is a diagram showing one example of the screen displayed during the data copy in Embodiment 4 of the present invention.
Fig. 41 is a flowchart of the managed copy control performed by the Java application in Embodiment 4 of the present invention.
Fig. 42 is a flowchart of the data copy performed by the managed copy control unit in Embodiment 4 of the present invention.
Fig. 43 is a diagram showing the disc access restriction imposed during the copy executed in Embodiment 4 of the present invention.
Fig. 44 is a diagram showing the internal structure of the BD-J module during the disc access restriction in Embodiment 4 of the present invention.
Fig. 45 is a flowchart of the procedure for checking the virtual package state during the managed copy in Embodiment 4 of the present invention.
Fig. 46 is a diagram showing one example of the notification sent to the user when the virtual package copy is not available in Embodiment 4 of the present invention.
Fig. 47 is a diagram showing the managed copy of the virtual package data in Embodiment 4 of the present invention.
Fig. 48 is a diagram showing one example of the notification sent to the user when only data on the BD-ROM is copied in Embodiment 4 of the present invention.
Fig. 49 is a diagram showing one example of the message asking the user whether he/she wants to copy the virtual package in Embodiment 4 of the present invention.
Fig. 50 is a diagram showing one example of the question asked to the user when the copy destination medium does not have a sufficient capacity in Embodiment 4 of the present invention.
Fig. 51 is a flowchart of the judgment on whether or not it is possible to build the virtual package in Embodiment 4 of the present invention.
Fig. 52 is a diagram showing one example of the menu screen of the playback device in Embodiment 5 of the present invention.
Fig. 53 is a diagram showing one example of the managed copy setting screen of the playback device in Embodiment 5 of the present invention.
Fig. 54 is a flowchart showing the procedure of the managed copy in Embodiment 5 of the present invention.
Fig. 55 is a diagram showing one example of the screen asking whether the user wants to use the local storage in Embodiment 5 of the present invention.

### [Description of Embodiments]

Claim 1 recites a playback device for copying files from a first recording medium to a second recording medium, the first recording medium storing an index table file, real data files associated with titles defined in the index table file, and a partial-copy index table file that defines one or more titles in association with a partial set of the real data files, the playback device comprising: a storage unit storing file mapping information which indicates predetermined file names of the partial-copy index table file and the partial set of the real data files, the predetermined file names prepared for use in the second recording medium; a mapping data processing unit operable, when part of files recorded on the first recording medium is to be copied, to change file names of the partial-copy index table file and the partial set of the real data files to the predetermined file names indicated by the file mapping information; and a copy execution unit operable to copy the partial-copy index table file and the partial set of the real data files to the second recording medium, by attaching thereto the respective predetermined file names prepared for use in the second recording medium.

Claim 5 recites the playback device further comprising: a virtual file system operable to generate package information which causes the files recorded on the first recording medium and files stored in a local storage to be read as one package, by combining thereof together in accordance with merge management information, wherein when the merge management information corresponding to the first recording medium exists in the local storage, the virtual file system checks whether or not the merge management information is authentic, and generates the package information after confirming that the merge management information is authentic, and the copy execution unit generates a combined file by combining the files recorded on the first recording medium with the files stored in the local storage in accordance with the generated package information, and copies the combined file to the second recording medium.

With the above-described structure, even in the case where the copy source data is scattered in a plurality of media, the managed copy is performed in the virtual file system which causes the scattered file to appear to exist in one medium. This makes it possible to copy the data scattered in a plurality of media to the second recording medium by the managed copy. Also, in the second recording medium which is the copy destination, the copied files have an appropriate file structure. It is therefore possible to create the second recording medium that maintains the playback compatibility.

Claim 12 recites a playback device for copying copy-target files to a second recording medium, from either a first recording medium or a local storage that stores an index table file, real data files associated with titles defined in the index table file, and a partial-copy index table file defining titles in association with a partial set of the real data files, the playback device comprising: the local storage storing file mapping information which indicates predetermined file names of the partial-copy index table file and the partial set of the real data files, the predetermined file names prepared for use in the second recording medium; a mapping data processing unit operable, when part of copy-available files is to be copied, to change file names of the partial-copy index table file and the partial set of the real data files to the predetermined file names indicated by the file mapping information; an authentication unit operable, when the copy-target files are files stored in the local storage, to check authenticity of the copy-target files stored in the local storage; and a copy execution unit operable to copy (i) the partial-copy index table file, (ii) files recorded on the first recording medium among the partial set of the real data files, and (iii) files whose authenticity has been confirmed by the authentication unit, to the second recording medium, by attaching thereto the respective predetermined file names.

For example, it is possible for the playback device to preliminarily download a bug fix for the copy source disc, an additional content and the like into the local storage. This makes it possible to copy the bug fix, the additional content and the like to the second recording medium by the managed copy, together with the files on the first recording medium. Also, by performing an authentication process onto the files stored in the local storage, it is possible to prevent incomplete files from being copied and create the second recording medium that maintains the playback compatibility.

Claim 14 recites a playback device for copying copy-target files to a second recording medium, the copy-target files being among an index table file, real data files associated with titles defined in the index table file, and a partial-copy index table file that defines titles in association with a partial set of the real data files, the playback device comprising: a storage unit storing copy management information which indicates file names on the first recording medium and predetermined file names for use in the second recording medium, of the partial-copy index table file and the partial set of the real data files that are copy-target files in a case of copying part of copy-available files; a judging unit operable to judge whether or not the copy-target files indicated by the copy management information exist in the first recording medium; a file generating unit operable to generate one or more files having been judged by the judging unit as not existing in the first recording medium; a mapping data processing unit operable, when a partial set of the copy-available files is to be copied, to change file names of copy-target files existing on the first recording medium and copy-target files generated by the file generating unit to the predetermined file names indicated by the copy management information; and a copy execution unit operable to copy the partial-copy index table file and the partial set of the real data files to the second recording medium, by attaching thereto the respective predetermined file names.

With the above-described structure, when a file required to play back the second recording medium does not exist in the first recording medium, the playback device can generate and supplement the file. This makes it possible to treat even a content for which partial files are missing, as a managed copy content.

Embodiments of the present invention are described below with reference to the drawings.

### (Embodiment 1)

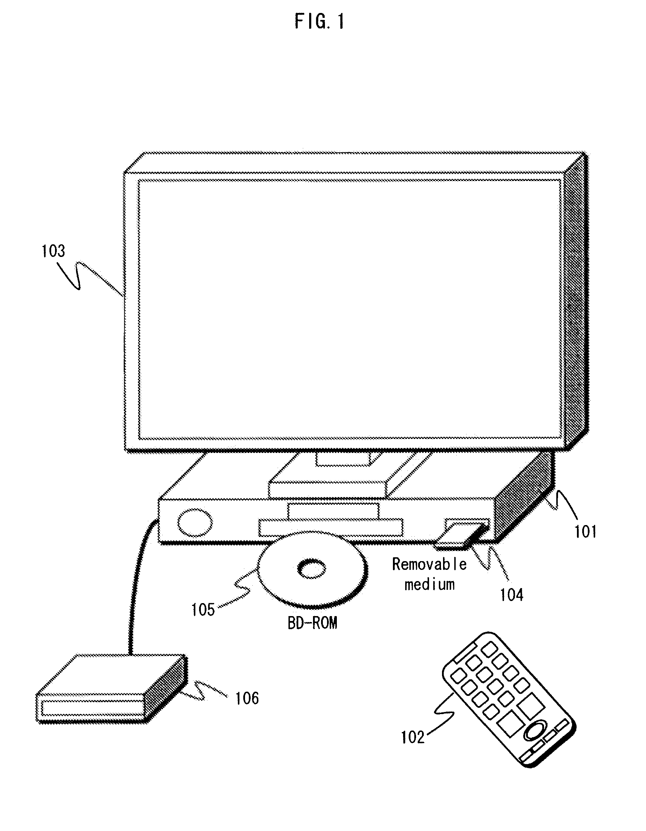

Firstly, of the implementation acts of the playback device pertaining to the present invention, a usage act is described. Fig. 1 shows one example of the form of a usage act of the playback device of the present invention.

In Fig. 1, the playback device of the present invention is a playback device 101. The playback device 101 is, for example, used to supply a movie work to a home theater system which includes a remote control 102 and a television 103. The playback device 101 is provided with a slot through which a removable medium 104, such as an SD memory card, a memory stick, CompactFlash, SmartMedia, and a multimedia card, is inserted therein, and a slot through which an external disc drive 106 is attached to the playback device for an optical disc, such as a recordable-type BD, a recordable-type DVD, and a recordable-type CD, to be read into the device. This completes the explanation of the usage act of the playback device pertaining to the present invention.

Next, the recording medium which is a target of playback of the playback device pertaining to the present invention will be described. What is played back by the playback device pertaining to the present invention, in the example shown in Fig. 1, is a BD-ROM 105.

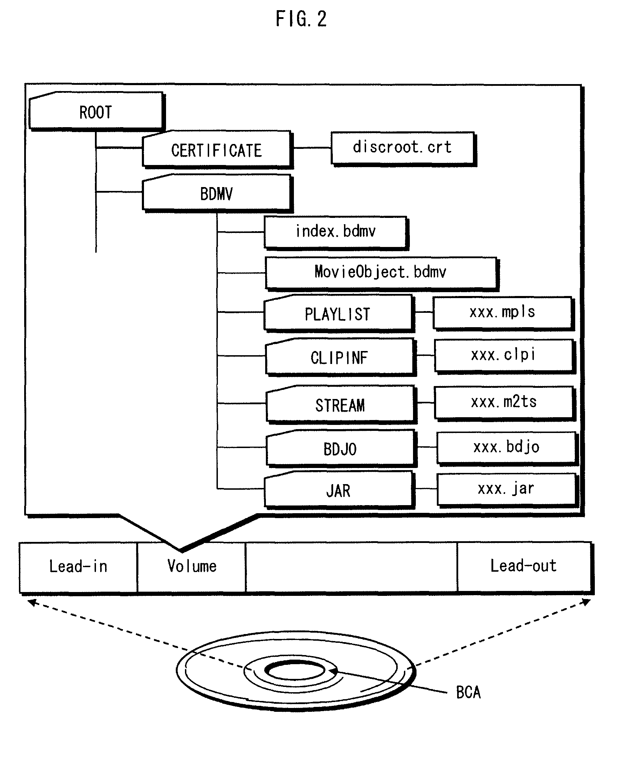

Fig. 2 shows the structure of the BD-ROM (also referred to as merely "BD"). In the present embodiment, the BD-ROM is explained centering on the AV application for playing back AV contents like movies. However, the BD-ROM can be used as a recording medium such as the CD-ROM or DVD-ROM for use in a computer, as well.

The BD-ROM, as is the case with other optical discs such as DVD and CD, has a recording area that extends spirally from the inner circumference to the outer circumference of the BD-ROM, and has a logical address space for recording logical data between a lead-in near the inner circumference and a lead-out near the outer circumference. Also, a special area called BCA (Burst Cutting Area) is provided inside the lead-in. The BCA can be read only by the drive. Since the BCA cannot be read by an application, it is used for copyright protection technologies or the like. A PMSN (Pre-recorded Media Serial Number) indicating a physical serial number of the recording medium is recorded in the BCA.

In the logical address space, application data such as image data is recorded starting with file system information (volume). The file system is, for example, the UDF or the ISO9660 that enables the logical data, which is recorded in the same manner as in a regular PC (personal computer), to be read out with use of a directory/file structure. With the file system, it is possible to read out directory/file names of 255 characters.

In the case of the present embodiment, the directory/file structure of the BD-ROM has the BDMV directory and the CERTIFICATE directory immediately under the ROOT directory. The BDMV directory is a directory in which data such as AV content and management information used in the BD-ROM are recorded. Also, under the CERTIFICATE directory, there is a "discroot.crt" file (the file name is fixed). The "discroot.crt" file stores a certificate that is to be used in the signature verification for the application.

Five sub-directories called "PLAYLIST directory", "CLIPINF directory", "STREAM directory", "BDJO directory", and "JAR directory" exist below the BDMV directory. Also, two types of files (i.e. index.bdmv and MovieObject.bdmv) are arranged under the BDMV directory.

The STREAM directory is a directory storing a file that is what is called a main body of the digital stream. In the STREAM directory, a file with an extension "m2ts" ("xxx.m2ts", wherein "xxx" is variable, and the extension "m2ts" is fixed) exists.

A file attached with the extension "m2ts" is a digital AV stream in the MPEG-TS (Transport Stream)format. The digital AV stream is generated by multiplexing a video stream, one or more audio streams, and one or more sub-picture streams. The video stream represents the moving picture portion of the movie, the audio stream represents the audio portion of the movie, and the sub-picture stream represents the subtitle of the movie.

In the PLAYLIST directory, a file with an extension "mpls" ("xxx.mpls", wherein "xxx" is variable, and the extension "mpls" is fixed) exists.

A file attached with extension "mpls" is a file storing the PlayList information and indicates a playback section of the stream by specifying a pair of an in-time and an out-time.

In the CLIPINF directory, a file with an extension "clpi" ("xxx.clpi", wherein "xxx" is variable, and the extension "clpi" is fixed) exists.

Files attached with extension "clpi" are pieces of clip information that correspond one-to-one to digital AV streams. The clip information include information such as encoding format of the digital AV stream, frame rate, bit rate, and resolution, as well as EP_map indicating the starting position of GOP.

In the JAR directory, a file with an extension "jar" ("xxx.jar", wherein "xxx" is variable, and the extension "jar" is fixed) exists.

A file attached with extension "jar" is a Java archive file that stores a program of a Java application that performs a dynamic scenario control using a Java virtual machine. When the Java application is to be used to control the playback of each title indicating a unit of playback of contents on the BD-ROM, the Java archive file is required.

In the BDJO directory, a file with an extension "bdjo" ("XXX.bdjo", wherein "xxx" is variable, and the extension "bdjo" is fixed) exists.

A file attached with extension "bdjo" is a file storing a BD-J object. The BD-J object is information that defines a title by showing the correspondence between applications and AV streams indicated by the playlist information. The BD-J object includes an application management table and a list of playlists that can be played back in the title. The application management table is a table that indicates applications whose life cycles correspond to the title. The application management table indicates each of the applications by an identifier of the application ("application ID") and a sequence of IDs of Java archive files which belong to the application. One application is composed of one or more Java archive files.

The "index.bdmv" (the file name is fixed) is a database file for the entire BD-ROM, and stores information such as an organization ID (32-bit) and a disc ID (128-bit), wherein the organization ID is an identification of a provider of a movie, and the disc ID is an identification uniquely assigned to each BD-ROM provided by the provider. After a disc is inserted into the playback device, the index.bdmv is read first for the disc to be uniquely recognized by the playback device. In addition, the index.bdmv includes a table that shows correspondence between: a plurality of playable titles on the BD-ROM; and BD-J objects that define each of the titles. Note that the index.bdmv corresponds to the "index table file" pertaining to the present invention.

The "MovieObject.bdmv" (the file name is fixed) is a file storing a scenario program in which is written a scenario for dynamically changing the progress of the playback of each title in the HDMV mode (which will be described later).

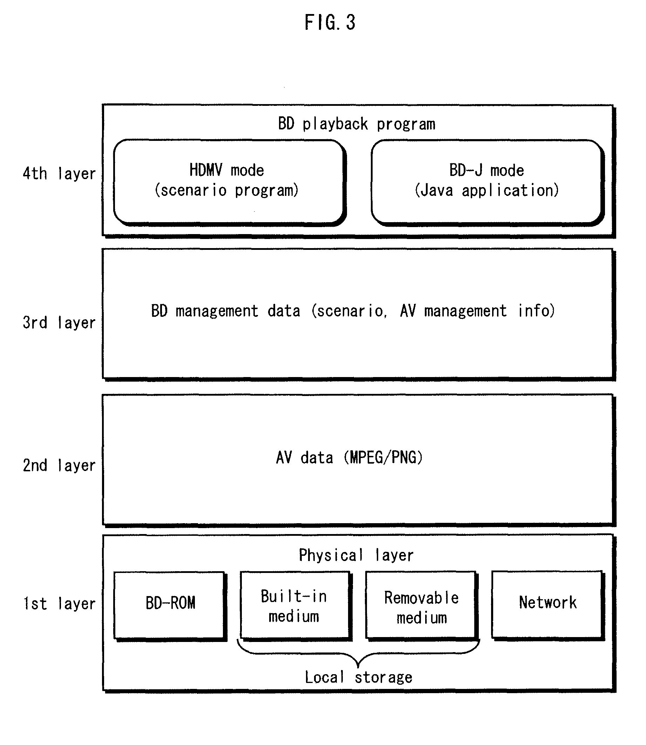

Fig. 3 shows a layer model of the playback control.

The first layer is a physical layer which controls the supply of the streams that are the object of processing. As shown in Fig. 3, the streams as the object of processing have various recording media and communication media as the supply sources thereof, including not only the BD-ROM, but also a built-in medium, a removable medium, a network, and a recordable-type disc. Here, the built-in medium is a recording medium that is originally embedded in the playback device. On the other hand, the removable medium is a portable recording medium such as an SD memory card, a memory stick, CompactFlash, SmartMedia, and a multimedia card. The built-in medium and the removable medium are each a recording medium that is used locally by the playback device, and is generically called "local storage". The first layer defines controls (disc access, card access, and network communication) to be performed on the supply sources such as those local storages and network.

The second layer is an AV data layer. The second layer defines the decoding methods that are used to decode the streams supplied in the first layer.

The third layer (BD management data) is a layer defining static scenarios of the streams. The static scenario is composed of playback path information and stream management information that are preliminarily defined by the disc producer. The third layer defines playback controls based on the playback path information and the stream management information.

The fourth layer (BD playback program) is a layer for realizing dynamic scenarios of the streams. The dynamic scenario is a program that executes at least one of a playback procedure of an AV stream and a control procedure concerning the playback of the AV stream. The playback control by the dynamic scenario changes depending on the user operations made to the device, and has a program-like characteristic.

Here, the dynamic playback control has two modes. One of them is an HDMV mode in which video data recorded on the BD-ROM is played back in the playback environment unique to the AV device. The other is a BD-J mode in which the added value of the video data recorded on the BD-ROM is increased.

In Fig. 3, the fourth layer includes both the HDMV mode and the BD-J mode. The HDMV mode is a playback mode in a DVD-like playback environment, and in the HDMV mode, a scenario program, in which a scenario for dynamically changing the progress of the playback is written, is run. The BD-J mode is a playback mode in which the Java virtual machine operates as a main performer. In the BD-J mode, the playback is controlled from the Java application.

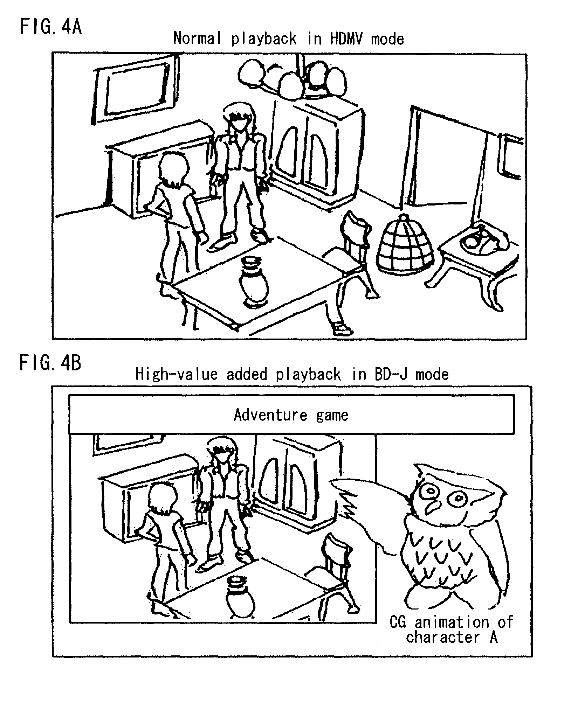

Figs. 4A and 4B show movie works created by the dynamic playback control in the two modes. Fig. 4A shows one scene of a movie work created by defining the dynamic playback control in the HDMV mode. In the HDMV mode, it is possible to describe the playback control by using commands which are similar to the commands that can be interpreted by the DVD playback device. Thus a playback control similar to the playback control of DVD can be defined. More specifically, a playback control can be defined such that the playback proceeds by selections on the menu.

Fig. 4B shows one scene of a movie work created by defining the dynamic playback control in the BD-J mode. In the BD-J mode, it is possible to describe the playback control with a Java language that can be interpreted by the Java virtual machine. If the playback control is to control the operation of a CG (Computer Graphics), it is possible, in the BD-J mode, to define a playback control for a CG (an owl in Fig. 4B) to move around next to a video image being displayed.

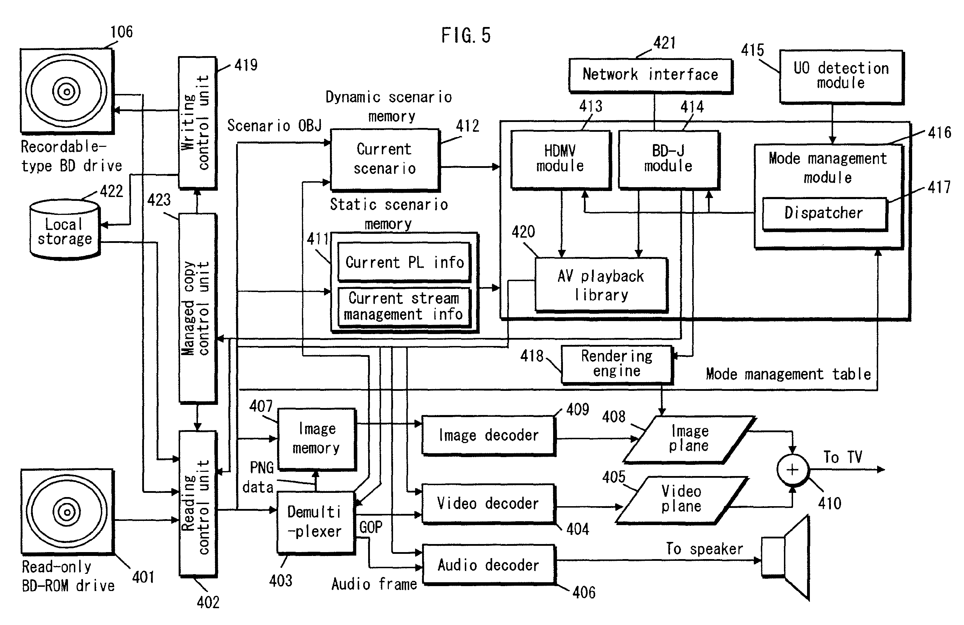

Fig. 5 is a block diagram showing a functional structure of the playback device. As shown in Fig. 5, the playback device includes a BD-ROM drive 401, a recordable-type BD drive 106, a reading control unit 402, a demultiplexer 403, a video decoder 404, a video plane 405, an audio decoder 406, an image memory 407, an image plane 408, an image decoder 409, an adder 410, a static scenario memory 411, a dynamic scenario memory 412, an HDMV module 413, a BD-J module 414, an UO detection module 415, a mode management module 416, a dispatcher 417, a rendering engine 418, a writing control unit 419, an AV playback library 420, a network interface 421, a local storage 422, and a managed copy control unit 423.

The BD-ROM drive 401 performs loading and ejection of the BD-ROM, and performs an access to the BD-ROM.

The reading control unit 402 controls reading of the data from the BD-R/RE loaded in the recordable-type BD drive 106, the BD-ROM 105 loaded in the BD-ROM drive 401, or the local storage 422.

The demultiplexer 403 demultiplexes the transport stream having been read by the reading control unit 402 into video and audio frames constituting GOPs, outputs the video frames to the video decoder 404, and outputs the outputs the audio frames to the audio decoder 406. Also, the demultiplexer 403 stores the sub-picture stream into the image memory 407, and stores the navigation button information into the dynamic scenario memory 412. The demultiplexing performed by the demultiplexer 403 includes a conversion process in which TS packets are converted into PES packets.

The video decoder 404 decodes the video frames output from the demultiplexer 403, and writes non-compressed pictures onto the video plane 405.

The video plane 405 is a memory for storing non-compressed pictures.

The audio decoder 406 decodes the audio frames output from the demultiplexer 403, and outputs non-compressed audio data.

The image memory 407 is a buffer for storing the sub-picture stream read out from the demultiplexer 403, the PNG data in the navigation button information, and image files directly read from the reading control unit 402.

The image plane 408 is a memory having an area for storing data of one screen, and extended sub-picture stream, PNG data, and image files are arranged in the area.

The image decoder 409 extends the sub-picture stream, PNG data, and image files, and writes the extended sub-picture stream, PNG data, and image files onto the image plane 408. The decoding of the sub-picture stream enables various menus and sub-pictures to be displayed on the screen.

The adder 410 overlays the non-compressed picture data stored in the video plane 405 with the image extended in the image plane 408, and outputs the result of the overlaying.

The screen shown in Fig. 4B (the screen in which a CG (an owl) is moving around next to a video image being displayed) is output as a result of the process in which the adder 410 overlays the picture stored in the video plane 405 with the image in the image plane 408.

The static scenario memory 411 is a memory for storing the current playlist and the current stream management information. Here, the current playlist is, among a plurality of playlists recorded on the BD-ROM or the local storage 422, a playlist that is currently a processing target. The current stream management information, among a plurality of pieces of stream management information recorded on the BD-ROM or the local storage 422, a piece of stream management information that is currently a processing target.

The dynamic scenario memory 412 is a memory for storing a current dynamic scenario to be subjected to the process performed by the HDMV module 413 and the BD-J module 414. The current dynamic scenario is, among a plurality of scenarios recorded on the BD-ROM or the local storage 422, a scenario that is currently a processing target.

The HDMV module 413 is a DVD virtual player which becomes a main performer in the HDMV mode. The HDMV module 413 executes the current scenario program having been read in the dynamic scenario memory 412.

The BD-J module 414 is a Java platform composed of a Java virtual machine, a configuration, and a profile. The BD-J module 414 generates a current Java object from a Java class file having been read in the dynamic scenario memory 412, and executes the generated current Java object. The Java virtual machine converts the Java object written in a Java language into native code for the CPU of the playback device, and causes the CPU to execute the native code.

The UO detection module 415 detects a user operation having been made to the remote control or the front panel of the playback device, and outputs information indicating the user operation (hereinafter, the information is referred to as "UO (User Operation)") to the mode management module 416.

The mode management module 416, holding a mode management table having been read from the BD-ROM or the local storage 422, performs a mode management and a branch control. The mode management performed by the mode management module 416 is a module assignment by which either the HDMV module 413 or the BD-J module 414 is assigned to the execution of the dynamic scenario.

The dispatcher 417 selects, from a plurality of UOs, UOs that are suitable for the current mode of the playback device, and passes the selected UOs to the module that executes the mode. For example, upon receiving UOs such as upward, downward, leftward, or rightward and "activate" during the execution of the HDMV mode, the dispatcher 417 outputs these UOs to the module that executes the HDMV mode.

The rendering engine 418, provided with basic software such as Java2D or OPEN-GL, renders computer graphics in accordance with an instruction from the BD-J module 414, and outputs the rendered computer graphics to the image plane 408.

The writing control unit 419, in accordance with an instruction from the managed copy control unit 423, writes data onto the medium loaded in the recordable-type BD drive 106 or onto the local storage 422.

The AV playback library 420 executes an AV playback function or a playlist playback function in accordance with a function call from the HDMV module 413 or the BD-J module 414.

The AV playback functions are a group of traditional functions succeeded from CD and DVD players, including: Play, Stop, Pause On, Pause Off, Still Off, Forward Play (with specification of the playback speed by an immediate value), Backward Play (with specification of the playback speed by an immediate value), Audio Change, Subpicture Change, and Angle Change. The playlist playback function is to perform, among such AV playback functions, Play or Stop in accordance with the playlist information.

The network interface 421 has a function to connect to a server to perform a download of BD-ROM additional contents that have been published on the Internet, an authentication of the managed copy, or a billing. The BD-ROM additional contents are contents to be added to the original contents, such as sub-audio, subtitles, bonus images, and applications to be added.

The BD-J module 414 can download additional contents having been published on the Internet into the local storage 422 by controlling the network interface 421. The authentication protocol for the managed copy to be used is specified by the Java application executed by the BD-J module 414.

The local storage 422 and the recordable-type BD drive 106 can be destinations of copies by the managed copy. Media selected by the user from a plurality of media, which are supported as destinations copies by the managed copy, are determined as the media which are the copy destinations.

Also, the local storage 422 can be used as a storage for storing the downloaded additional contents and data to be used by the applications. The area for storing the additional contents is divided into sub-areas corresponding to respective BD-ROMs; and the area for storing the data to be used by the applications is divided into sub-areas corresponding to respective applications. Furthermore, the local storage 422 may be used to hold merge management information which includes a merge rule indicating how the downloaded additional contents should be merged with data on the BD-ROM.

The managed copy control unit 423, upon receiving an instruction from the Java application being executed by the BD-J module, performs copying of data from the BD-ROM. The managed copy control unit 423 may re-encode a stream depending on the medium that is a copy destination. For example, the managed copy control unit 423 performs a bit-by-bit copy when the copy destination medium is BD-R; and re-encodes the stream when the copy destination medium is a medium with a small capacity, such as DVD-R. In this way, it is possible to perform data copies by compressing the streams.

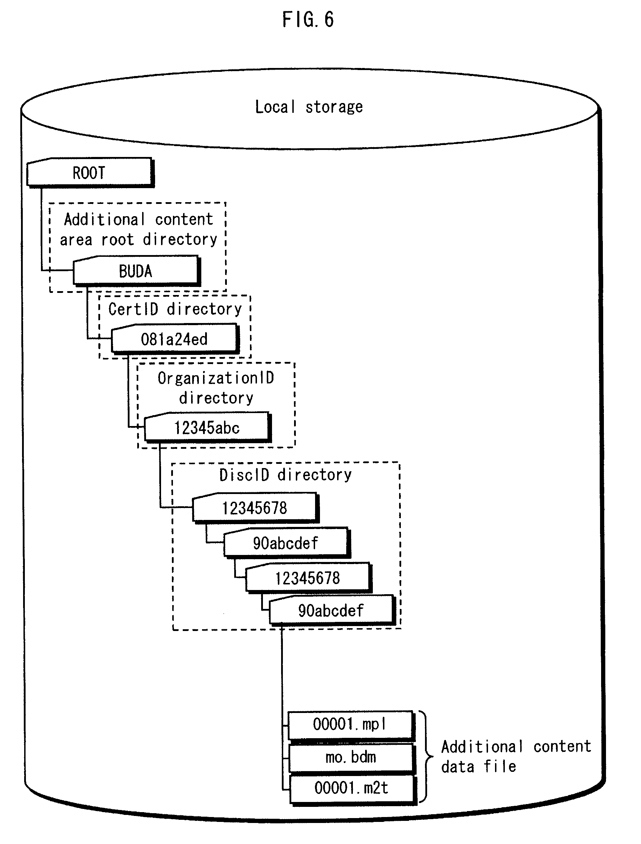

Fig. 6 shows the data structure of the local storage. The recording media targeted to be played back by the playback device pertaining to the present invention include local storages such as the hard disk and SD card, as well as the BD-ROM.

The following describes the data recorded on the local storage shown in Fig. 6. The local storage is provided with an additional content area root directory.

The local storage has an additional content area directory under the ROOT directory. Its directory name is a fixed value composed of eight characters or less (BUDA). Applications can store under the BUDA directory (including a sub-directory thereof) arbitrary files such as additional files downloaded from the server.

As indicated by the OrganizationID directory and the DiscID directory shown in Fig. 6, directories for respective BD-ROMs are provided under a directory for a provider (Organization) so that data downloaded from the BD-ROMs is stored separately for each BD-ROM.

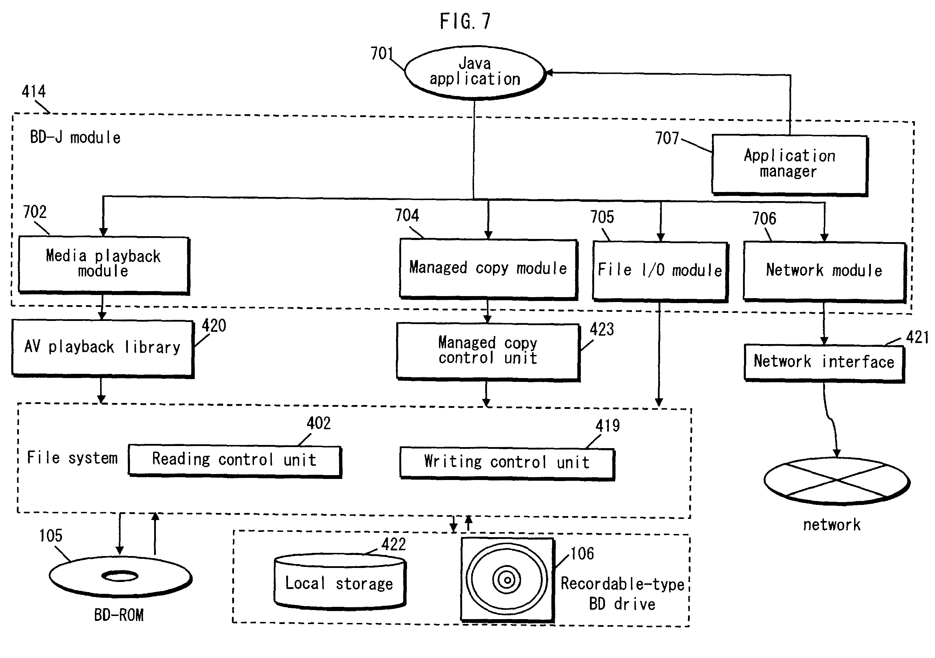

Fig. 7 shows a detailed structure of the BD-J module 414 shown in Fig. 5.

The BD-J module 414 includes a media playback module 702, a managed copy module 704, a file I/O module 705, a network module 706, and an application manager 707. Note that the AV playback library 420, the network interface 421, the local storage 422, and the managed copy control unit 423 shown in Fig. 7 are the same as those shown in Fig. 5 and are shown in Fig. 7 for the sake of explanation of the media playback module 702 through application manager 707.

The application manager 707 manages the start and end of a Java application 701 based on the application management information recorded on the BD-ROM. Also, the application manager 707 performs a process of receiving a UO event from the dispatcher 417 and passing the UO event to the Java application 701 currently in operation.

The media playback module 702 supplies APIs (Application Program Interfaces) for the media playback control to the Java application 701. When the Java application 701 calls an API for the media playback control, the media playback module 702 calls a corresponding function from the AV playback library 420, and performs the AV playback control.

The network module 706 supplies APIs for the network control to the Java application 701. In accordance with a network control request from the Java application 701, the network module 706 performs a network control using the network interface 421. The Java application 701 can perform, by using the network module 706, a search for additional contents having been published, downloading, and an access to the server that is required for the managed copy authentication.

The file I/O module 705 deals with file access requests from the Java application 701 to media such as the BD-ROM, local storage, and recordable-type BD drive.

The managed copy module 704 supplies APIs for the managed copy control to the Java application 701. The Java application 701 calls an API to obtain the copy source and copy destination media information that are required for the managed copy authentication, request the managed copy control unit to start copying, check the state of progress of the copying, and so on. These APIs will be described in detail later.

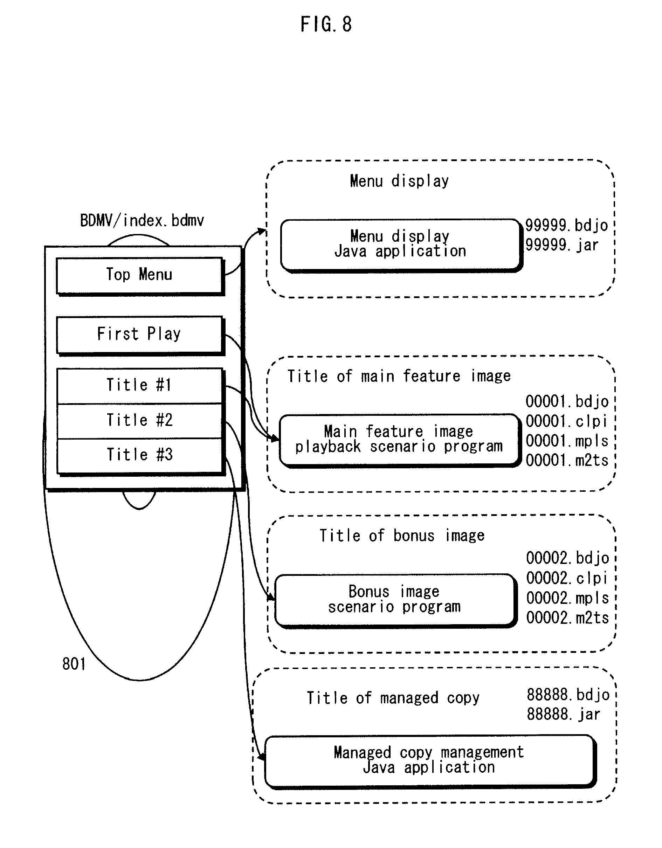

Fig. 8 shows the correspondence between index.bdmv file and titles. Here, the title is a unit of playback composed of an application and AV streams.

The index.bdmv file, with the title structure of the disc written therein, manages the reference relationship between each title on the disc and the corresponding application (the Java application when it is a BD-J mode title, or the scenario program when it is an HDMV mode title).

As special titles, there are "First Play" and "Top Menu". The "First Play" is a title that is automatically played back when the BD is started, and is mainly used to display Terms of Service of BD or the like. The "Top Menu" is played back when the menu key on the remote control is pressed, or when a playback of a title ends, and is mainly used for the user to select a title or a language for subtitle/audio.

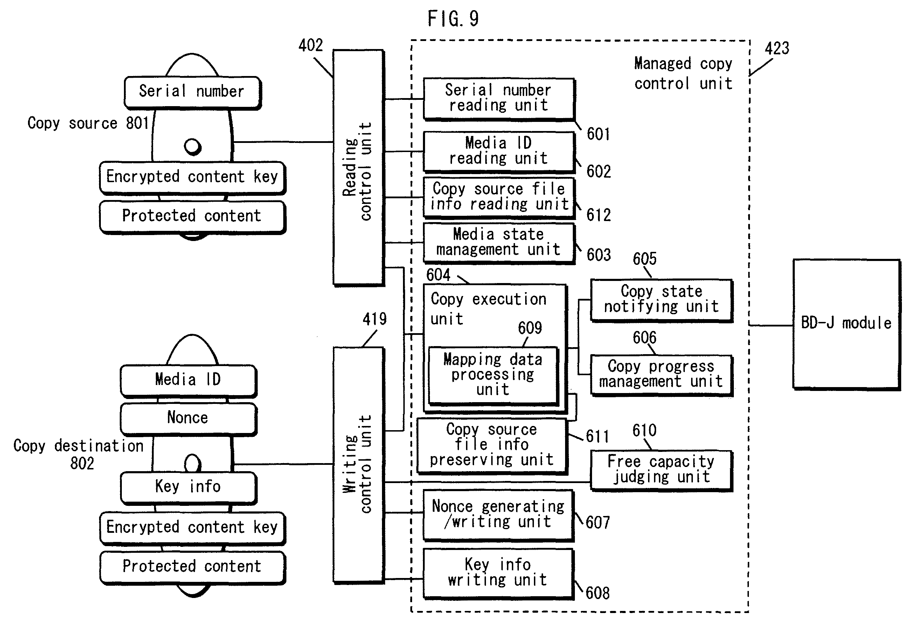

Fig. 9 shows the managed copy control unit 423 in detail.

The managed copy control unit 423 is composed of a serial number reading unit 601, a media ID reading unit 602, a media state management unit 603, a copy execution unit 604, a copy state notifying unit 605, a copy progress management unit 606, a nonce generating/writing unit 607, a key information writing unit 608, a mapping data processing unit 609, a free capacity judging unit 610, and a copy source file information preserving unit 611.

The serial number reading unit 601 reads a PMSN (Pre-recorded Media Serial Number) indicating a physical serial number of a recording medium, the PMSN being recorded in a BCA (Burst Cutting Area), a special area provided on the BD-ROM. The serial number is used when the key information is generated, as will be described later.

The media ID reading unit 602 reads a media ID from a copy destination medium, the media ID being information uniquely assigned to each medium. In general, the value of the media ID cannot be rewritten, and different values are assigned to the respective media even if they are of a same type. The media ID is also used when the key information is generated.

The media state management unit 603 manages a list of media types that can be used as copy destinations by the playback device. For example, suppose that the playback device is equipped with an SD card slot and a recordable-type BD-drive, and that, currently, only an SD card is inserted, then it is judged that the SD card is available as a copy destination. On the other hand, when both an SD card and a BD-R are inserted, it is judged that both the SD card and the BD-R are available as copy destinations. The media state management unit 603 further manages the free capacity of the copy destination media.

The copy execution unit 604 performs a data copy from the BD-ROM to another medium. The location in the copy destination medium to which the data should be copied from the BD-ROM is determined by the mapping data processing unit 609 based on the file mapping information in the copy management information list. The copy execution unit 604 performs the copying based on the location determined by the mapping data processing unit 609. Also, the copy execution unit 604 may re-encode a stream depending on the copy destination medium.

The copy state notifying unit 605 manages the transfer among the states such as a copy start, a normal end, and an abnormal end, and notifies the Java application of a state transfer via the BD-J module.

The copy progress management unit 606, while data is copied, manages the number of bytes remaining to be copied and the number of bytes having been copied, and notifies information of the current progress in the copy in response to a request from the Java application.

The nonce generating/writing unit 607 generates and writes a random number (nonce) each time a managed copy is performed. The value of the nonce is also used when the key information is generated.

The key information writing unit 608 writes the key information that is generated from the serial number of the BD-ROM, the media ID of the copy destination medium, and the nonce. The key information is generated based on the private key held by the server. Upon obtaining the serial number, media ID, and nonce, the Java application transmits those values to the server.

The server generates the key information based on the values transmitted from the Java application and the private key that is managed on the server side, and sends the generated key information to the Java application.

The Java application sets the key information received from the server into the key information writing unit 608. The key information writing unit 608 writes the set key information onto the copy destination medium. The key information is used to decrypt an encrypted content key. When the encrypted content key is decrypted, a playback of a protected content becomes possible. That is to say, without the key information, it is impossible to play back the protected content on the copy destination medium even if the encrypted content key and the protected content are copied, in an unauthorized manner, from the BD-ROM to the copy destination medium.

The mapping data processing unit 609 determines the destination to which a file is to be copied, based on the file mapping information in the copy source file information preserved by the copy source file information preserving unit 611.

The free capacity judging unit 610 judges whether or not the copy destination has a sufficient free capacity for the copy, based on the free capacity of the copy destination medium and the copy source content.

The copy source file information preserving unit 611 preserves the copy source file information that is recorded on the disc or transmitted from the server.

The copy source file information reading unit 612 reads copy source file information from the copy source medium, the copy source file information being information that relates to files being the target of the managed copy.

The managed copy control unit 423 includes and controls the above-described structural elements from the Java application.

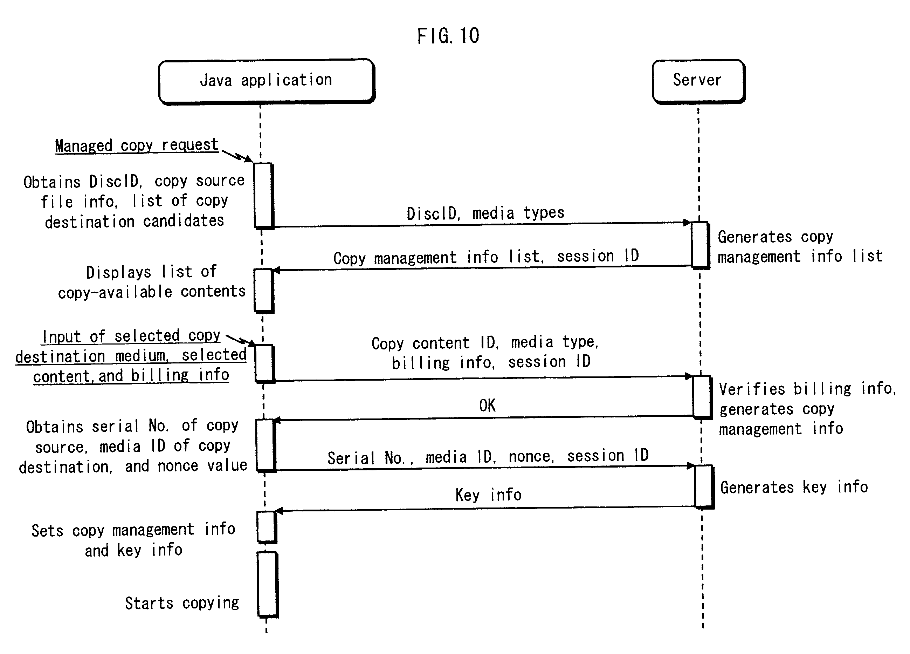

Next, a sequence of operations performed in a data transmission/reception between the Java application and the server will be described with reference to Figs. 10 through 12.

Fig. 10 is a sequence diagram showing a data transmission/reception performed between the Java application and the server.

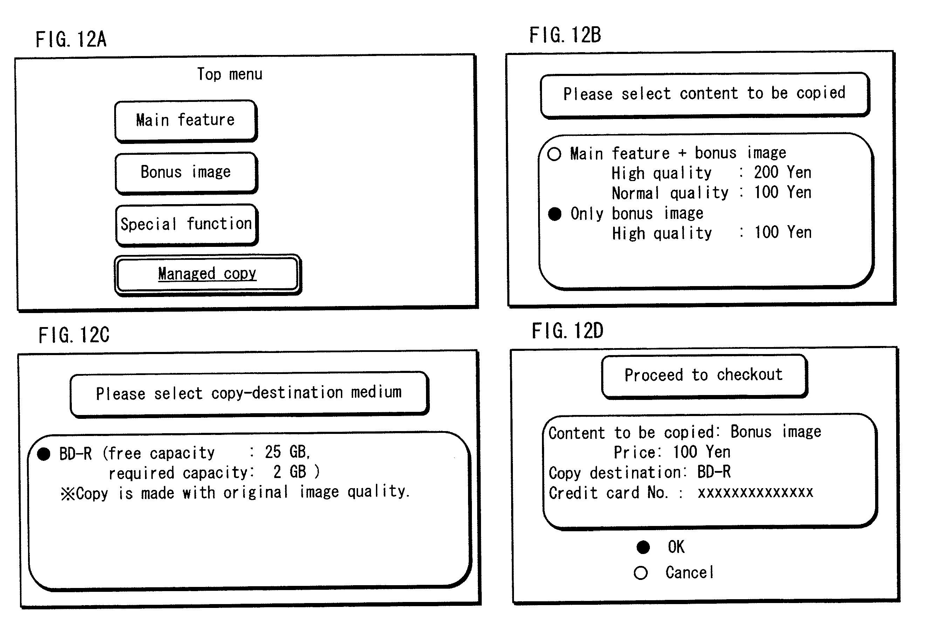

The process of the managed copy is started when the user selects the managed copy on the menu screen (an example of the displayed screen is shown in Fig. 12A) or the like. The Java application transmits (i) the DiscID written in the BD management information (index.bdmv) and (ii) the list of media types that can be used as copy destinations, to the server. The server generates a copy management information list and a session ID and transmits them to the Java application.

The session ID is used by the server side to manage the state of progress in the communication that has been started between the server and the Java application. For example, in the case where the server has received a request for key information when the billing process has not been processed, the server can check the session ID and judge that the billing process has not been completed in the current session, and reject the request for key information.

The copy management information list includes, for each entry, a copy content ID which is an identifier assigned to uniquely identify the content of the copy, content information written in a character sequence that can be understood by the user, files to be copied and the file mapping information thereof, media types available as copy destinations, a resolution, a capacity required for the copy, and a price.

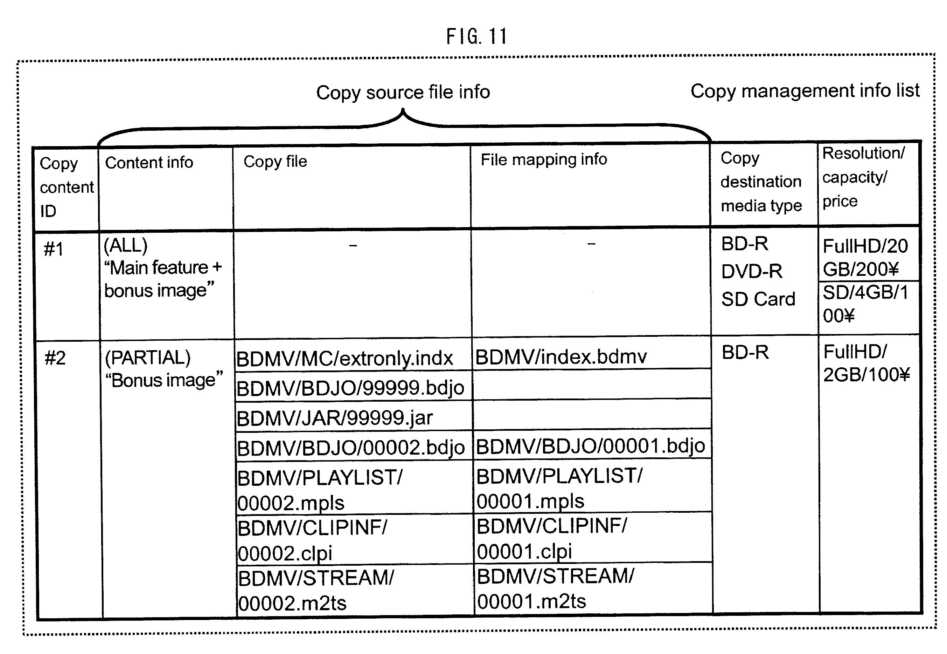

Fig. 11 shows one example of the copy management information list. The copy management information list is composed of a plurality of entries (pieces) of copy management information, and an ID (copy content ID) is assigned to each entry of copy management information for it to be uniquely identified. Each entry of copy management information is composed of the copy content ID, content information, copy file, file mapping information, copy destination media type, and resolution/capacity/price information.

The copy content ID is used to identify each piece of copy management information. The content information includes a character sequence indicating the target of the copy, and a flag indicating which of "all copy" and "partial copy" the copy is. The copy file indicates a list of all files in the copy source disc that are the target of the copy. The file mapping information indicates at what locations in the copy destination, with what file names, the files listed in the copy file should be stored. When there is no change in the storage location of the file, the file mapping information may be omitted. The copy destination media type indicates types of recording media that are available as the copy destinations. The resolution/capacity/price information indicates the resolution at which the content is copied into the copy destination, and indicates how much capacity is required for the copy destination to store the copied content.

The Java application presents on the screen, for the user, detailed information of the contents that can be copied, based on the resolution/capacity/price information in the copy management information list (Fig. 12B shows an example of the screen).

Alternatively, a screen as shown in Fig. 12C may be presented to the user, urging the user to select the copy destination from candidates therefor on the screen. The content to be copied and the copy destination are determined based on the selection made by the user. In so doing, the free capacity of each candidate for the copy destination may be compared with the required capacity written in the copy management information list, and when there are any candidates not having a sufficient free capacity, such candidates may be taken off from the list, or a warning may be issued to the user.

When the content to be copied and the copy destination are determined, and the determined content is subject to fees, the user is required to input billing information (Fig. 12D shows an example of the screen). The billing information may be, for example, a credit card number or a user ID. When no billing is required, the input of the billing information may be omitted, or only the counted number of copies may be checked.

After the user completes the input of the billing information, the Java application transmits, to the server side, the copy content ID, media type of the copy destination, billing information, and session ID corresponding to the content selected by the user. Upon judging that these data are correct, the server side returns OK to the Java application.

Upon receiving the OK notification from the server side, the Java application obtains element data of the key information. The element data of the key information are the serial number of the copy source, media ID of the copy destination, and nonce. Upon receiving the copy destination, media ID of the copy destination, nonce, and session ID from the Java application, the server generates key information from (i) the element data of the key information and (ii) the private key held by the server. Upon receiving the key information from the server, the Java application passes a piece of copy management information of the copy target and the key information to the managed copy control unit. Upon completion of the passing of the copy management information and the key information, the managed copy control unit starts copying the data.

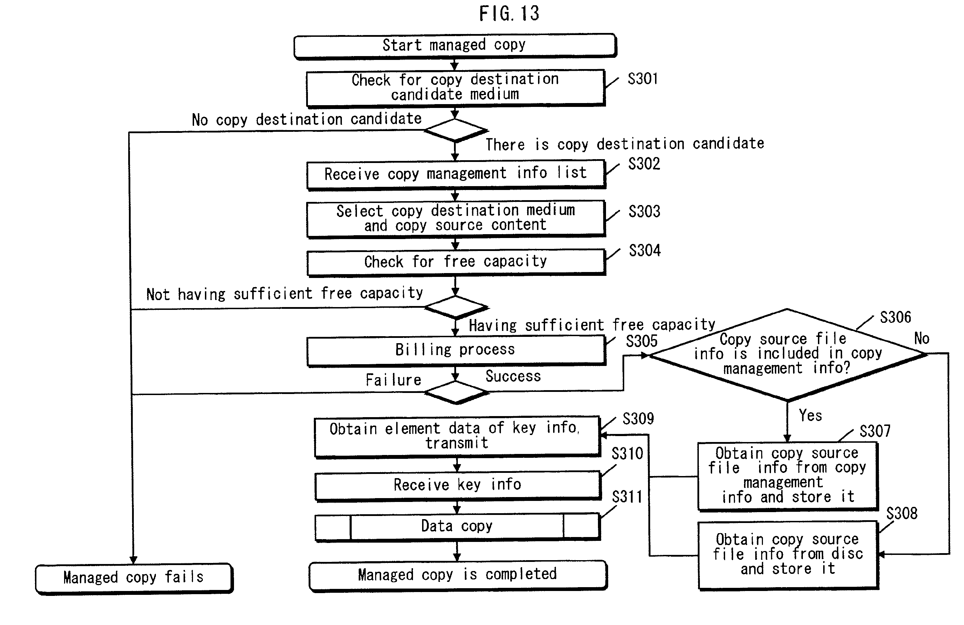

Fig. 13 is a flowchart of the managed copy control performed by the Java application.

First, the Java application checks whether or not currently there is a medium that can be a candidate for copy destination (S301). When it judges that there is a copy destination candidate medium, the Java application obtains the DiscID from the copy source disc, and obtains a list of media types of the copy destination candidate media from the managed copy control unit 423. The Java application transmits these information to the server.

Next, the Java application receives, from the server, the copy management information list, which was generated by the server based on the information that had been transmitted to the server, and the session ID from the server (S302). When it is judged that there is no copy destination candidate medium, the managed copy process is ended.

Upon obtaining the copy management information list, the Java application selects a copy destination medium and copy source content based on the copy management information list (S303). As the method for the selection, the Java application itself may select them, or it may present a list of copy-available contents and media to the user and cause the user to select.

Figs. 12B and 12C show examples of lists of copy-available contents and media presented to the user. As shown in Fig. 12C, the free capacity and the like may be displayed as well as the media names, and further, the capacities required for the copy destination media written in the copy management information list may be displayed.

Furthermore, the required capacity written in the copy management information list may not be displayed as it is, but the required capacity may be calculated from the file size of the copy source, and the value obtained as a result of the calculation may be displayed as well. The calculation of the capacity required for the copy may be performed by the Java application. Alternatively, the Java application may refer to the result of the calculation performed by the playback device. In particular, when a stream is to be preserved after it is re-compressed, the file size and the number of files change. Thus in such a case, it is more efficient for the playback device to calculate the required capacity.

Next, the free capacity judging unit 610 of the managed copy control unit 423 judges whether or not the copy destination has a sufficient free capacity for the copy, based on the free capacity of the copy destination medium and the total size of the copy source content (S304). When it judges that the copy destination has a sufficient free capacity, the Java application performs the billing process (S305). The billing process mentioned here refers to a series of processes for connecting to the server and performing authentication on the credit card number and the like. When the billing process is completed, the server extracts the copy source file information of the target to be billed, from the copy management information list, and transmits it and notification of "OK" to the Java application. It should be noted here that, if the billing is not necessary, step S305 may be skipped. When it is judged that the copy destination does not have a sufficient free capacity, the managed copy process is terminated.

When it receives from the server a notification that the billing process resulted in a failure, the Java application ends the managed copy process after, for example, notifying the user of the failure of the billing process. Also, upon receiving from the server an OK notification indicating that the billing process was performed successfully, the Java application checks whether the copy source file information is included in the copy management information that was transmitted together with the OK notification (S306).

When the copy source file is included in the copy management information that was received as a result of step S306, the Java application extracts the copy source file information and stores it into the copy source file information preserving unit 611 (S307). When the copy source file is not included in the copy management information that was received as a result of step S306, the Java application obtains copy source file information, which is preliminarily included in the copy source disc, from the copy source disc via the copy source file information reading unit 612, and stores it into the copy source file information preserving unit 611 (S308).

As described above, the present structure enables the content provider to update the copy-target file, which has preliminarily been defined in the copy source disc, via the server when the content provider desires to update it.

Next, the Java application obtains the element data of the key information from the managed copy control unit 423 (S309). Note here that the element data of the key information are: the serial number of the copy source medium obtained by the serial number reading unit 601; media ID of the copy destination obtained from the media ID reading unit 602; and nonce generated by the nonce generating/writing unit 607.

Upon receiving the element data of the key information from the Java application, the server generates key information from (i) the received element data of the key information and (ii) the private key held by the server, and transmits the generated key information to the Java application. Upon receiving the key information from the server, the Java application passes the key information and copy management information to the managed copy control unit (S310). Upon completion of the passing of the copy management information and the key information, the Java application issues a data copy start request to the managed copy control unit, and the copy execution unit 604 of the managed copy control unit starts the managed copy (S311).

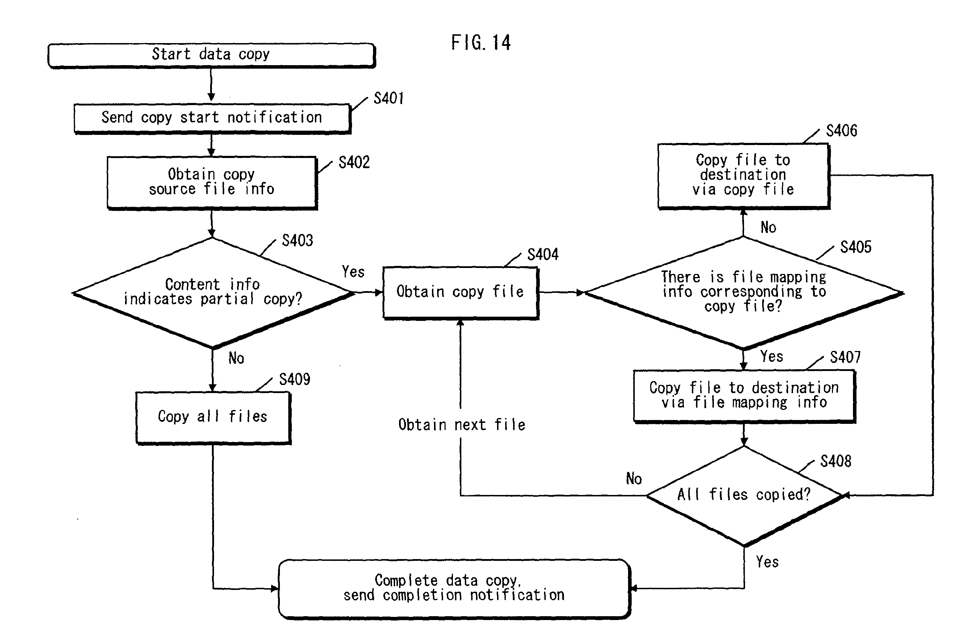

Fig. 14 is a flowchart showing a detailed procedure of the data copy step S311 performed by the managed copy control unit 423.

First, immediately after the start of the data copy, the managed copy control unit 423 sends a copy start notification to the Java application (S401). Next, the managed copy control unit 423 obtains the copy source file information from the copy source file information preserving unit 611 (S402).

Next, the managed copy control unit 423 refers to the content information in copy source file information obtained in step S402, and judges whether the content information indicates a partial copy or an all copy (S403).

When it is judged in step S403 that it indicates an all copy, all of the files in the copy source disc are copied (S409). When it is judged in step S403 that it indicates a partial copy, the mapping data processing unit 609 obtains a file name that is listed first in the copy file (S404).

Next, the mapping data processing unit 609 refers to the file mapping information to check whether or not a file name corresponding to the file name of the copy file exists (S405). When it is judged in step S405 that file mapping information corresponding to the copy file does not exist, the copy execution unit 604 copies the file to the copy destination with the directory and file names written in the copy file, via the writing control unit 419 (S406). When it is judged in step S405 that file mapping information corresponding to the copy file exists, the copy execution unit 604 copies the file, whose name is written in the copy file, to the copy destination with the directory and file names written in the mapping information, via the writing control unit 419 (S407).

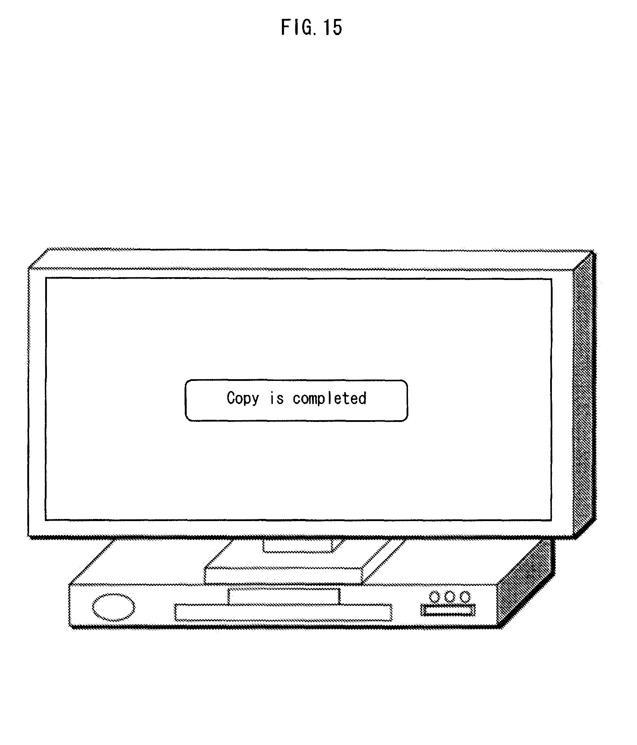

The copy execution unit 604, after the completion of step S406 or S407, checks whether or not the copy file includes a file name of a file that has not been copied yet (S408). When it is judged in step S408 that the copy file includes a file name of a file that has not been copied yet, the next file is obtained and the control proceeds to step S404. When it is judged in step S408 that the copy file does not indicate a file that has not been copied yet, it means that the data copy process is completed, therefore a completion notification is sent to the Java application and the process is terminated. Fig. 15 shows an example of a screen displayed when the copy is completed.

The following describes an advantageous effect of ensuring the compatibility with use of the partial copy in which the mapping information explained in the present embodiment is used, in comparison with a conventional technology of the managed copy disclosed in Japanese Patent Application Publication No. 2008-98765.

The two technologies will be compared in the case where a disc for playing back only a bonus image is to be created from a copy source disc which, with the disc structure shown in Fig. 8, includes the main feature and the four titles (including TopMenu).

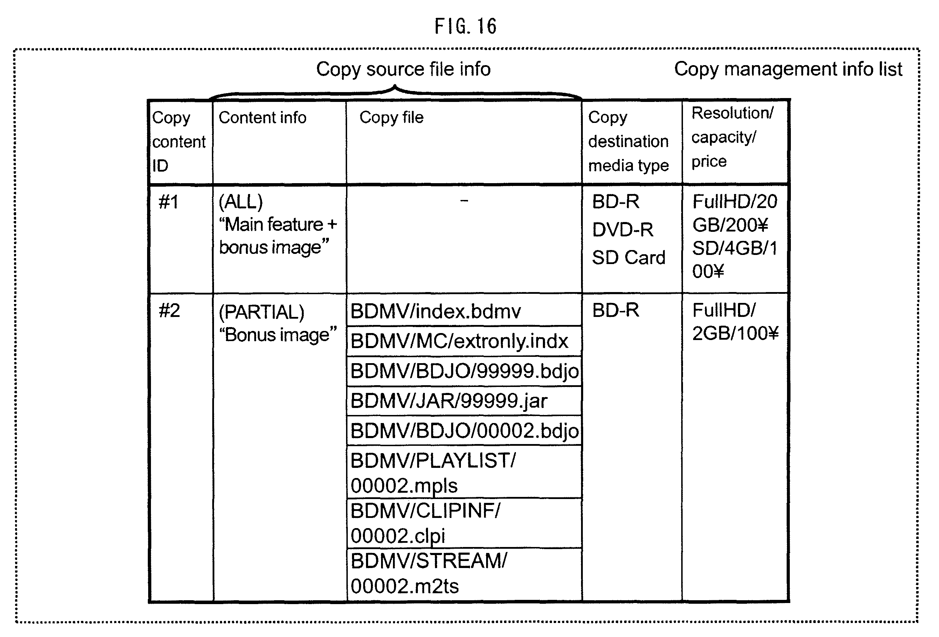

First the conventional technology will be described with reference to Figs. 16-18.

Fig. 16 shows copy management information in the conventional technology in which the mapping information is not included. During the managed copy, the user selects a partial copy for copying a content with copy content ID #2 shown in Fig. 16. In that case, it is expected that a disc for playing back only a bonus image is to be generated as a copy destination disc. More specifically, a group of files related to the bonus image and the disc structure database file (index bdmv) need to be copied.

In the "copy file" column for the copy content ID #2 shown in Fig. 16, files that need to be copied are listed. Those files include the disc structure database file, an application for displaying a menu, and files necessary for the bonus image. Also, a disc structure database file for a new disc structure is to be copied.

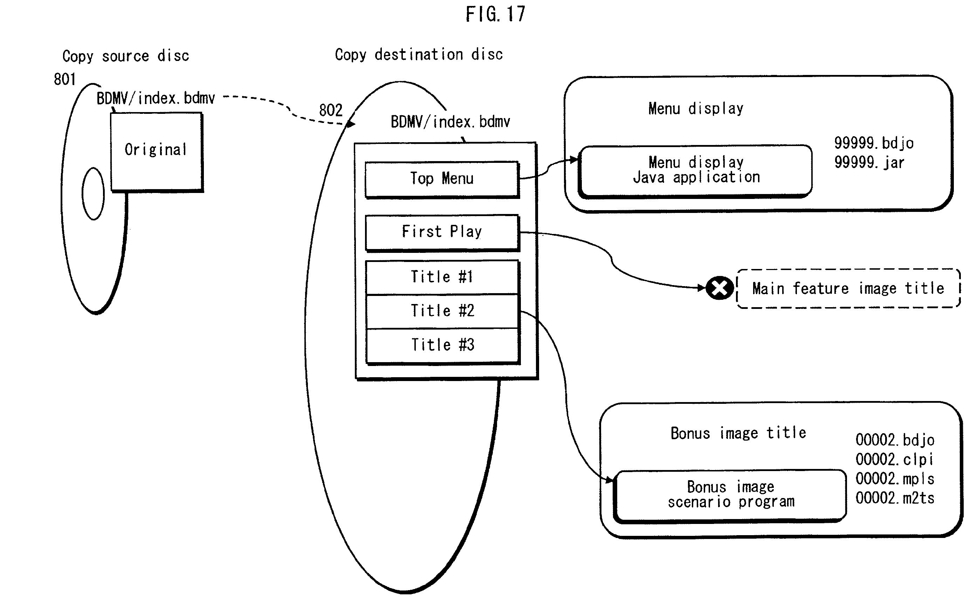

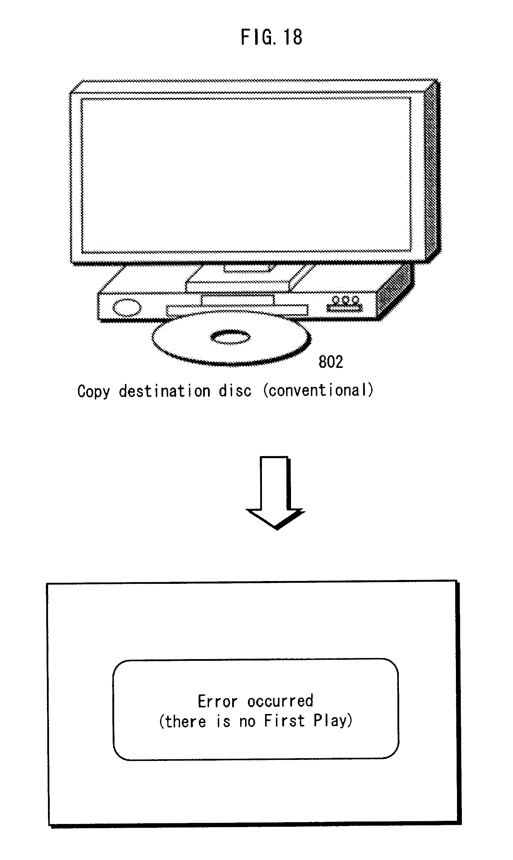

Fig. 17 shows a structure when the conventional playback device has completed a copy by using the copy management information shown in Fig. 16. According to the conventional technology, the playback device copies the file name written in the copy file of the copy management information, as it is to the copy destination. The copy destination disc generated as a result of the copying includes the disc structure database file, copied from the copy source as it is, for playing back the main feature when the disc is activated. However, the main feature has not been copied since the disc is intended to play back only the bonus image. With such a structure, when an attempt is made to play back the copy destination disc shown in Fig. 17, an error occurs as shown in Fig. 18 because the disc does not have the main feature that is to be played back first according to the disc structure database file.

Even if the copy source disc includes a disc structure database file for a new disc structure (BDMV/MC/extronly.indx), the disc structure database file for the new disc structure is arranged in a location that is not used by the copy source disc.

In this way, in the managed copy by the conventional technology, the old file structure is copied to the new disc as it is, thus the disc structure database file for the new disc structure is stored at a location that is not used by the new disc, either.

Accordingly, in the partial copy by the conventional technology, even if the copy source disc includes a disc structure database file for a new disc structure, the new disc (copy destination disc) cannot use the disc structure database file for the new disc structure, resulting in a partial-copy disc that might operate in an unexpected manner.

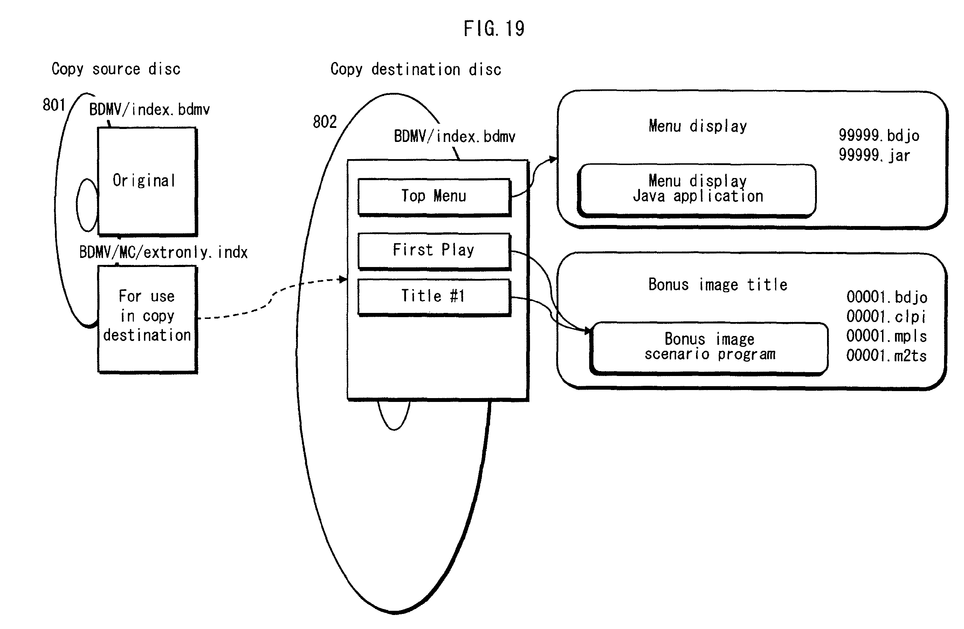

Next, Fig. 19 shows a structure when a copy has been completed according to the present embodiment.

According to the present embodiment, the playback device performs the managed copy based on the copy management information shown in Fig. 11. The copy management information shown in Fig. 11 indicates that a disc structure database file for a new disc structure (BDMVIMC/extronly.indx), which is stored in a location that is not used by the copy source disc, is to be mapped to a location (BDMV/index.bdmv) in the new disc that can be used by the playback device. Note that the disc structure database file for the new disc structure (BDMV/MC/extronly.indx) corresponds to the "partial-copy index table file" pertaining to the present invention.

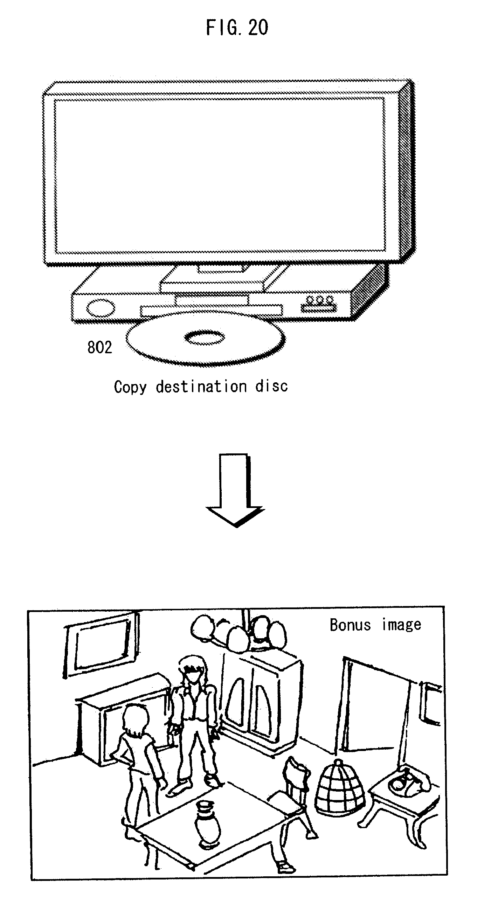

When the playback device of the present embodiment performs copying with the process shown in Figs. 13 and 14, the copy destination disc shown in Fig. 19 is generated. That is to say, according to the present embodiment, it is possible to generate a disc having compatibility of the database. When the copy destination disc shown in Fig. 19 is played back, no incompatibility of the database occurs and the bonus image is played back as shown in Fig. 20.

### (Embodiment 2)

In Embodiment 1, all of the targets to be copied by the managed copy to the copy destination are files existing in the copy source disc. In Embodiment 2, in addition to the files existing in the copy source disc, data stored in the local storage is copied by the managed copy as well.

Note that only differences from Embodiment 1 are described in Embodiment 2, and the remaining parts in Embodiment 2 are presumed to be the same as those in Embodiment 1.

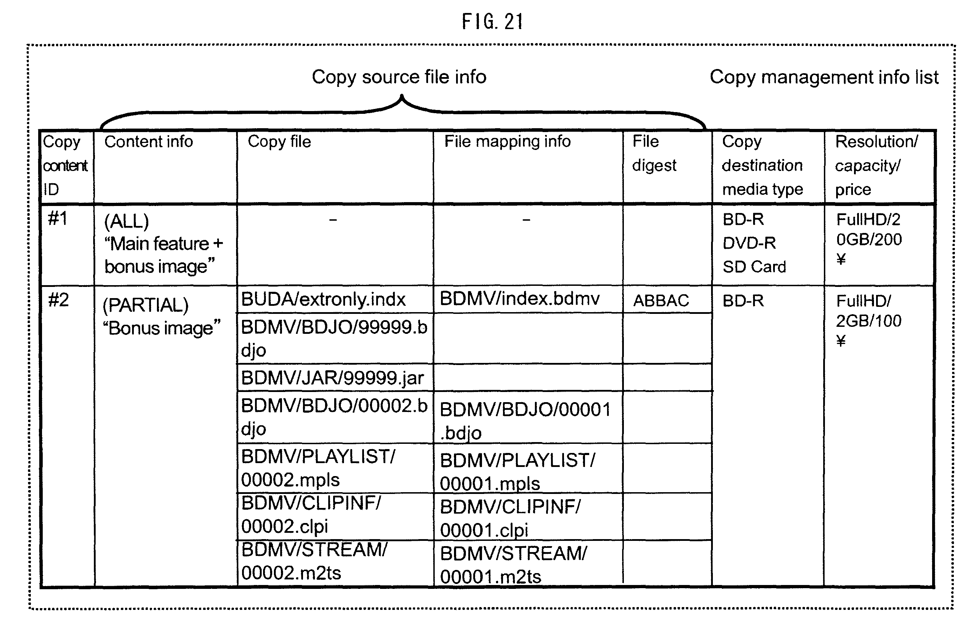

Fig. 21 shows one example of the copy management information list in Embodiment 2. The copy management information list in Embodiment 2 includes file digest information in addition to the copy content ID, content information, copy file, file mapping information, copy destination media type, and resolution/capacity/price information shown in Fig. 11. Description of the parts that are the same as those shown in Fig. 11 is omitted, and only differences therefrom are described.

In the present embodiment, the copy file column can include, as the copy targets, not only files existing in the copy source disc but also files stored in the local storage. Files stored in the local storage have file names that start with "BUDA". In the example shown in Fig. 21, "BUDA/extronly.indx" is a file stored in the local storage.

The file digest column newly added in the present embodiment is provided only when a copy-target file refers to data stored in the local storage, and a digest value of the copy-target file is written in the file digest column.

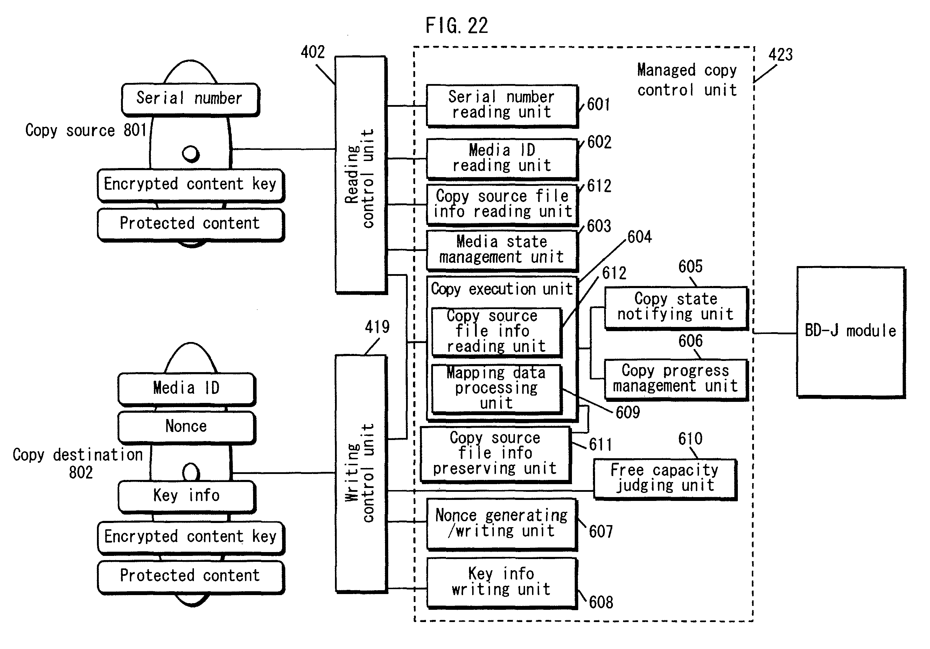

Fig. 22 shows the structure of the managed copy control unit in Embodiment 2. The structural elements of Fig. 22 have already been explained with reference to Fig. 9, thus description of the same elements is omitted and only differences therefrom are described.

Fig. 22 newly introduces an authentication unit 613. The authentication unit 613, when a copy target is a file stored in the local storage, checks the authenticity of the file by performing a digest value authentication process.

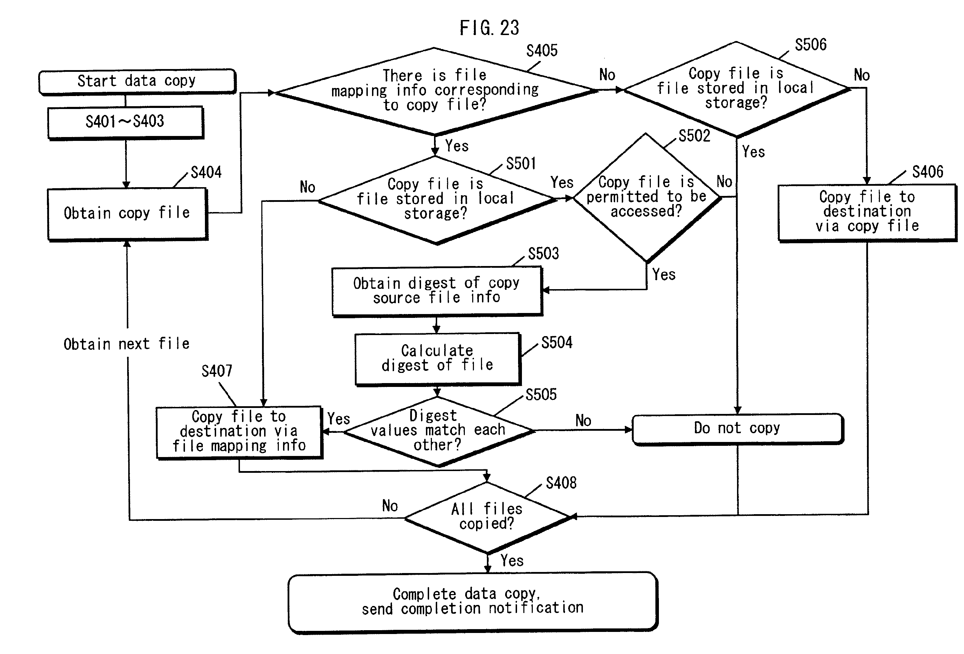

Fig. 23 is a flowchart showing the procedure of a data copy performed by the managed copy control unit 423 in Embodiment 2. The flowchart of Fig. 23 includes steps S501 through S505 in addition to the steps constituting the data copy process shown in Fig. 14. Description of steps S401 through S404 is omitted since they are the same as those shown in Fig. 14.

After obtaining a file name that is listed first in the copy file in step S404, the mapping data processing unit 609 refers to the file mapping information to check whether or not a file name corresponding to the file name of the copy file exists (S405). When it is judged in step S405 that file mapping information corresponding to the copy file exists, the copy execution unit 604 judges whether or not the copy file is a file stored in the local storage (S501). Note that the judgment on whether or not the copy file is a file stored in the local storage is typically made by checking the starting character sequence of the file name, but other judgment methods may be used as well.

Next, when it is judged in step S501 that the copy file is not a file stored in the local storage, the copy execution unit 604 copies the file, whose name is written in the copy file, to the copy destination with the directory and file names written in the mapping information, via the writing control unit 419 (S407).

When it is judged in step S501 that the copy file is a file stored in the local storage, the authenticity of the data stored in the local storage is checked in steps S502 through S505 as follows.

First the managed copy control unit 423 judges whether or not the file stored in the local storage, whose name is written in the copy file, is accessible by the managed copy management Java application (S502). When it is judged that the file stored in the local storage is accessible in step S502, the copy execution unit 604 obtains a digest value corresponding to the copy file in the copy management information, and passes the obtained digest value to the authentication unit 613 (S503). When it is judged that the file stored in the local storage is not accessible in step S502, the copy-target file is not copied, and the control moves to step S408.

Next, the copy execution unit 604 obtains the binary data of the file whose name is written in the copy file, and passes the obtained binary data to the authentication unit 613. Upon receiving the binary data of the file, the authentication unit 613 calculates the digest value of the file (S504).

Next, the authentication unit 613 compares the digest value received in step S503 with the digest value calculated in step S504 and judges whether or not they match each other (S505).

When it is judged in step S505 that the digest values match each other, the copy execution unit 604 copies the file whose name is written in the copy file to the copy destination with the directory and file names written in the file mapping information, via the writing control unit 419 (S407).

When it is judged in step S505 that the digest values do not match each other, it means that a file having been tampered with was specified as the target of the managed copy, thus the copy-target file is not copied, and the control moves to step S408.

Next, when it is judged in step S405 that file mapping information corresponding to the copy file does not exist, the copy execution unit 604 judges whether or not the copy file is a file stored in the local storage (S506). When it is judged in step S506 that the copy file is not a file stored in the local storage, the copy execution unit 604 copies the file, whose name is written in the copy file, to the copy destination with the directory and file names written in the copy file, via the writing control unit 419 (S406). When it is judged in step S506 that the copy file is a file stored in the local storage, the copy-target file is not copied, and the control moves to step S408. This is because the data stored in the local storage cannot be copied without mapping.

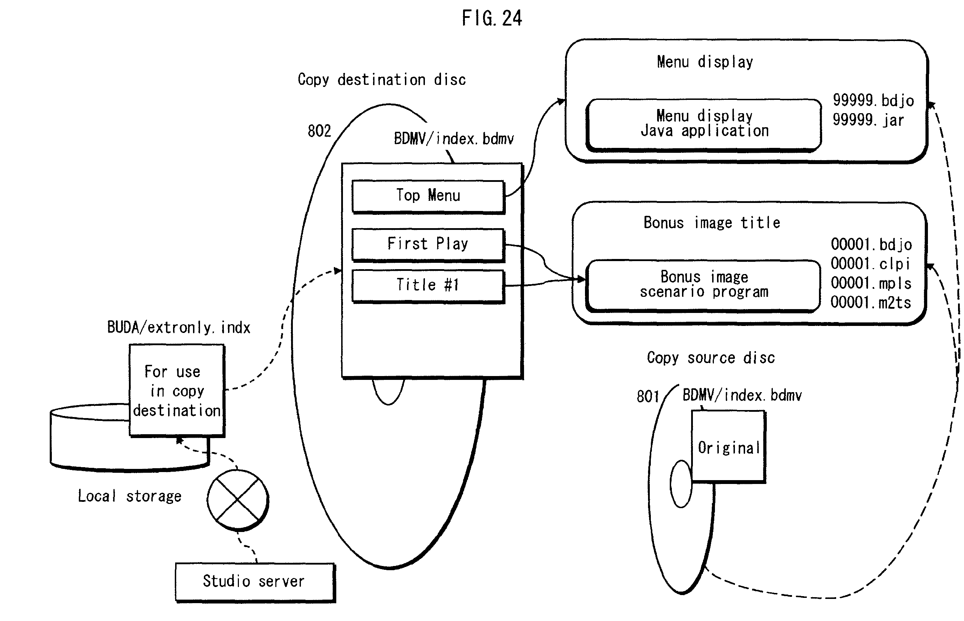

Fig. 24 shows a structure when a copy has been completed according to the present embodiment. In the present embodiment, the playback device performs the managed copy based on the copy management information (Fig. 21) that can specify a file stored in the local storage.

As shown in Fig. 24, the copy destination disc, while using a stream file copied from the copy source disc, includes database file "BDMV/index" which has not been copied from the copy source disc, but has been copied from the local storage.

That is to say, according to the present embodiment, not only it is possible to generate a disc having compatibility of the playback, but it is possible for an application to preliminarily download a bug fix or an additional content from the server and to use the bug fix or the additional content as a managed copy content.

### (Embodiment 3)

In Embodiment 1, the copy management information to be used in the managed copy is generated by extending conventional copy management information that is stored in the disc or transmitted from the server.

In Embodiment 3, the playback device automatically generates an index file when, for example, an index file for the copy destination has not been stored preliminarily, or a disc completely conforming to the standard cannot be created. Note that only differences from Embodiment 1 are described in Embodiment 3, and the remaining parts in Embodiment 3 are presumed to be the same as those in Embodiment 1.

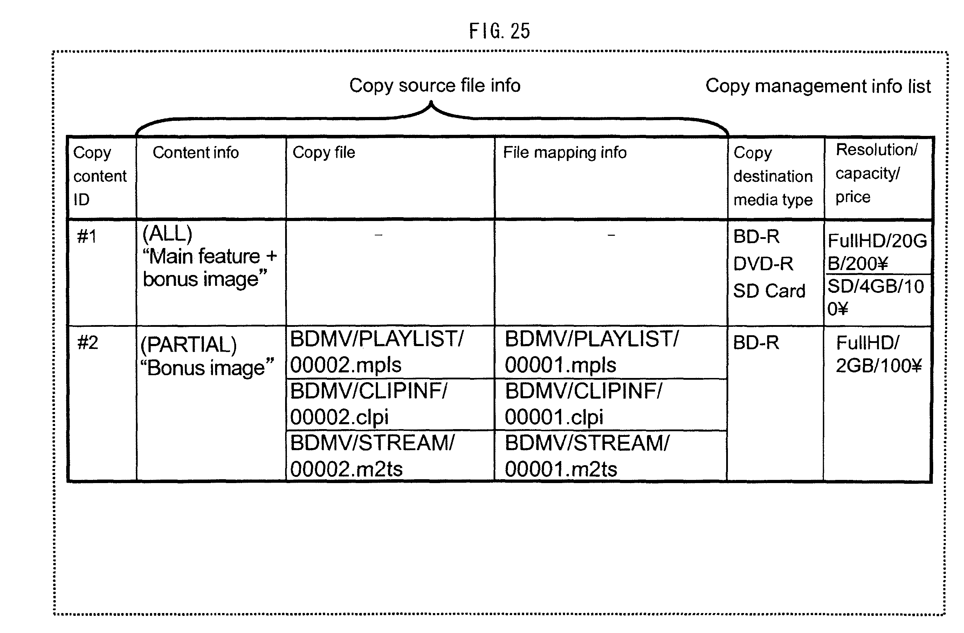

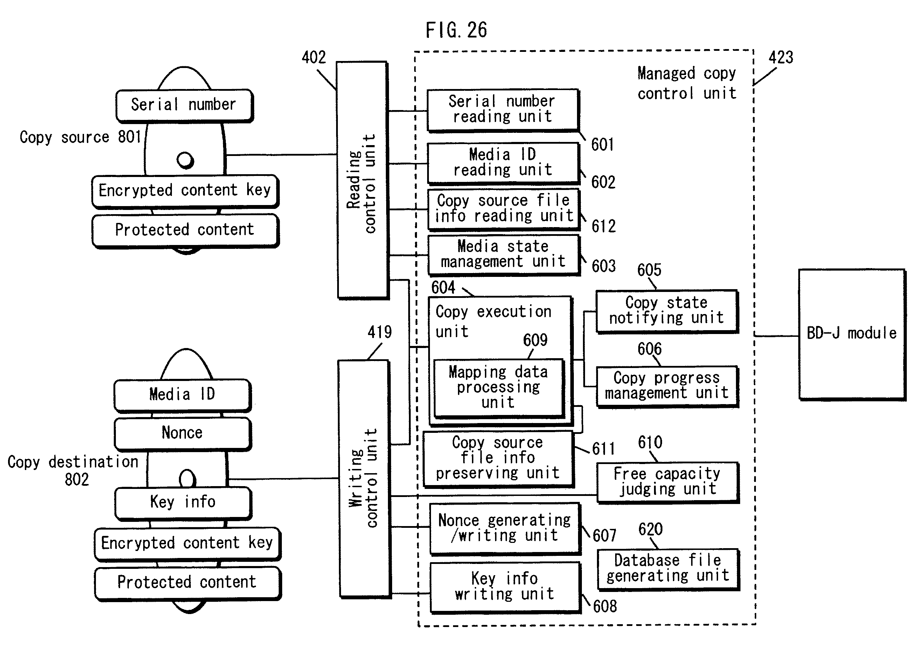

Fig. 25 shows one example of the copy management information list in Embodiment 3. In the "copy file" column for the copy content ID #2 shown in Fig. 25, neither the index file required for the playback nor the scenario file is specified as the copy target. In that case, there is a problem that the copy destination disc generated as a result of the managed copy cannot be played back. In view of the problem, the present embodiment describes, with reference to Figs. 26 through 28, a method for maintaining the compatibility of playback even if the copy management information list shown in Fig. 25 is received.

Fig. 26 shows the structure of the managed copy control unit in Embodiment 3. The structural elements of Fig. 26 have already been explained with reference to Fig. 9, thus description of the same elements is omitted and only differences therefrom are described.

Fig. 26 newly introduces a database file generating unit 620. The database file generating unit 620 generates the index file required for the playback and the scenario file when they are not specified in the copy file in the copy management information.

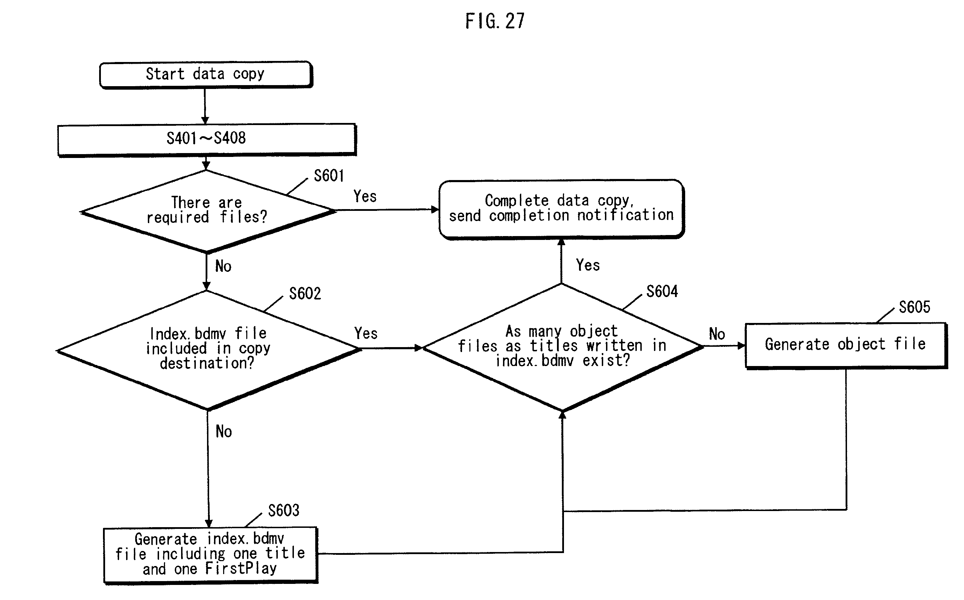

Fig. 27 is a flowchart showing the procedure of a data copy performed by the managed copy control unit 423 in Embodiment 3. The flowchart of Fig. 27 includes steps S601 through S607 in addition to the steps constituting the data copy process shown in Fig. 14. Description of steps S401 through S408 is omitted since they are the same as those shown in Fig. 14.

After it is judged in step S408 that all files specified in the copy management information have been copied, the managed copy control unit 423 judges whether or not files required for the copy destination disc to be played back are included in the copy destination disc (step S601).

When it is judged that the files required for the copy destination disc to be played back are included in the copy destination disc, a data copy completion notification is sent to the Java application and the data copy is terminated, as in Embodiment 1. When it is judged that all the files required for the copy destination disc to be played back are not included in the copy destination disc, it is necessary to check one by one which files should be included in the copy destination disc. The managed copy control unit 423 first checks whether or not the "index.bdmv" file, which shows the title structure of the copy destination, is included in the copy destination (S602).

When it is judged in step S602 that the "index.bdmv" file is not included in the copy destination, the database file generating unit 620 generates the "index.bdmv" file for the copy destination (S603). More specifically, the database file generating unit 620 generates an "index.bdmv" file that includes one FirstPlay and one title. Note that although it is described here that the "index.bdmv" file is "generated", a template thereof may be preliminarily held by the playback device, and the template may be copied.

When the process of step S603 is completed, or when it is judged in step S602 that the "index.bdmv" file is included in the copy destination, the managed copy control unit 423 judges whether or not the number of titles included in the "index.bdmv" matches the number of object files in the copy source file information (S604).

The object files mentioned here are files that indicate the structure of images included in the title, and are files with file names with extension "bdjo" or a file with a file name "MovieObject.bdmv".

When it is judged in step S604 that there is a shortage of object files, the database file generating unit 620 generates an object file associated with a stream in the copy source file information (S605). Here, it is desirable that the object file is associated with a stream that is not referenced by another object file. However, since the present embodiment is aimed to prevent an error from occurring during a playback, the object file may be associated with a stream that has been referenced by another object file.

Steps S604 and S605 are repeatedly performed until the number of object files matches the number of titles included in the "index.bdmv". When it is judged that the number of titles included in the "index.bdmv" matches the number of object files, the managed copy control unit 423 sends a completion notification to the Java application and terminates the data copy.

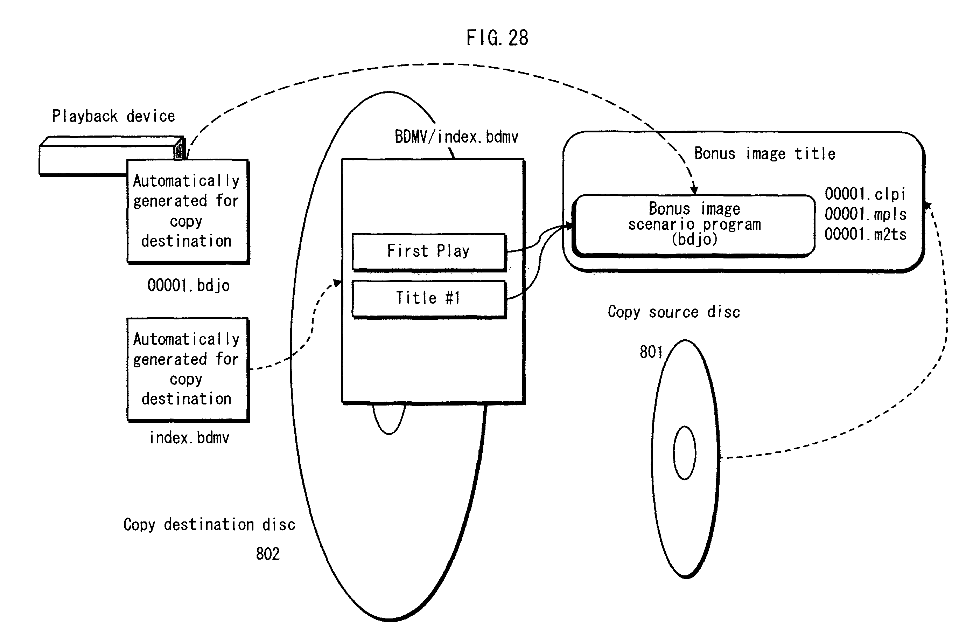

Fig. 28 shows a structure when a copy has been completed according to the present embodiment. In the present embodiment, when there is a shortage of files required for the playback, the playback device side generates the required files and adds them in the managed copy targets.

As shown in Fig. 28, the copy destination disc includes the "index.bdmv" file and an object file that were automatically generated by the playback device, and includes streams copied from the copy source disc. That is to say, according to the present embodiment, not only it is possible to generate a disc having compatibility of the playback, but even if the data received from the server has a defect, the playback device can generates files covering the defect, and perform the managed copy by using the files.

Note that although it is described in the present embodiment that object files are generated, Java applications may be generated instead.

### (Embodiment 4)

In Embodiment 4, a managed copy using a virtual file system is described.

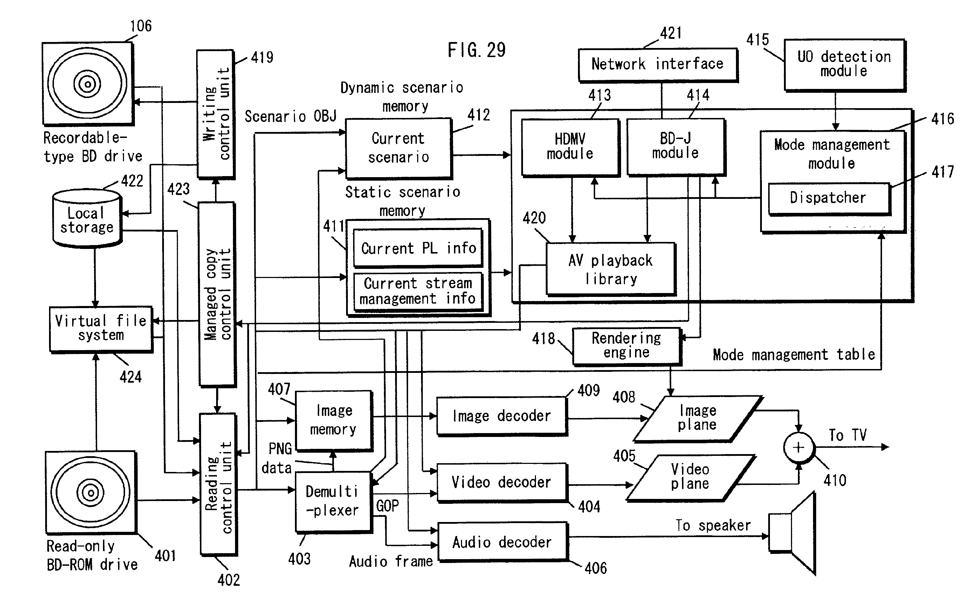

Fig. 29 is a block diagram showing a functional structure of the playback device in Embodiment 4. As a difference from Embodiment 1, a virtual file system 424 has been added in the structure of the playback device. The local storage 422 in Embodiment 4 is not only used as a copy destination of the managed copy, but used as a storage for storing downloaded additional contents or data to be used by applications.

The area for storing the additional contents is divided into sub-areas corresponding to respective BD-ROMs; and the area for storing the data to be used by the applications is divided into sub-areas corresponding to respective applications. Furthermore, the local storage 422 is used to hold merge management information which includes a merge rule indicating how the downloaded additional contents should be merged with data on the BD-ROM.

The virtual file system 424 builds a virtual BD-ROM (virtual package) by merging the additional contents stored in the local storage 422 with the contents on the BD-ROM, based on the merge management information downloaded in the local storage 422 together with the additional contents.

The HDMV module 413 and the BD-J module 414 can reference both the virtual package and the original BD-ROM with no distinction between them. During a playback of the virtual package, the playback device control the playback by using both the data stored in the virtual package and the data in the original BD-ROM.

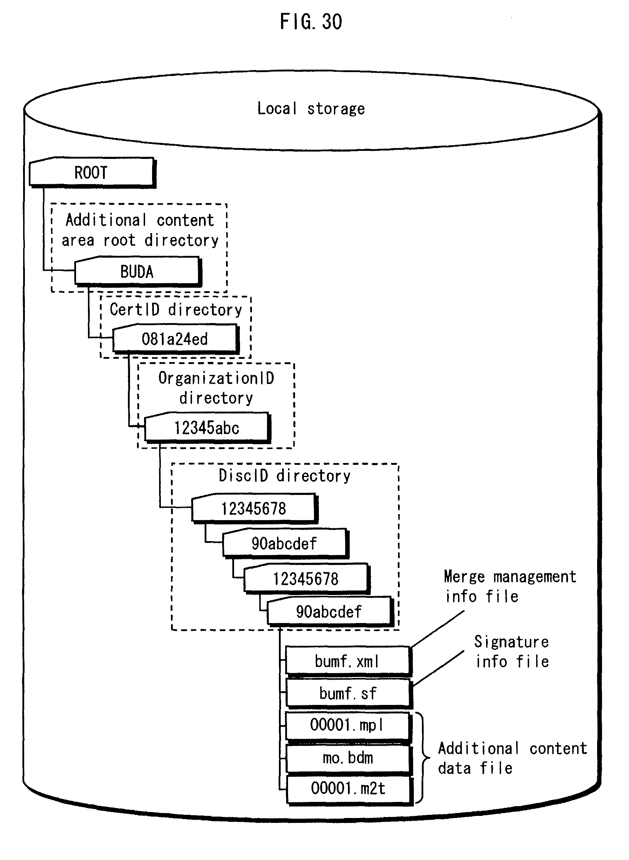

Fig. 30 shows the directory structure of the local storage in Embodiment 4. The local storage includes an additional content area root directory, a CertID directory, an OrganizationID directory, a DiscID directory, a merge management information file, a signature information file, and an additional content data file.

The additional content area root directory exists immediately under the ROOT directory of the local storage. The additional content area root directory indicates the root of the additional content area and its directory name is a fixed value composed of eight characters or less (BUDA).

The CertID directory is a directory whose directory name is assigned an ID derived from the disc root certificate (discroot.crt) stored in the BD-ROM. More specifically, the directory name is composed of eight characters that are represented in the hexadecimal notation by 32 bits at the start of 160 bits constituting the SHA-1 digest value of the disc root certificate.

The OrganizationID directory is a directory whose directory name is composed of eight characters that are represented in the hexadecimal notation by a 32-bit identifier (OrganizationID) identifying the provider of the movie that is written in the BD management information (index.bdmv) stored in the BD-ROM.

The DiscID directory is composed of four directories. The directory names of the four directories are each composed of eight characters that are represented in the hexadecimal notation by 32 bits which are obtained by dividing a 128-bit identifier of the BD-ROM (DiscID) into four groups in order from the start. The DiscID is written in the BD management information (index.bdmv) stored in the BD-ROM.

Sub-directories corresponding to BD-ROMs are provided under a directory corresponding to a predetermined provider. With this structure, downloaded data can be stored independently for each of the BD-ROMs. Under each sub-directory, the merge management information file, signature information file, and additional content data file exist.

The merge management information file stores merge management information which is used to build a virtual package from the additional content data files stored in the local storage and the files stored in the BD-ROM. The merge management information is composed of file storage location information, virtual path information, and a virtual package ID. The file storage location information indicates locations in which the files constituting the virtual package are stored in the local storage. The virtual path information indicates access paths to those files on the virtual package. The virtual package ID uniquely identifies each virtual package. Different IDs are assigned to respective virtual packages even if the virtual packages relate to a same BD-ROM. The merge management information file is stored under the DiscID directory, with a file name "bumf.xml".

The signature information file is a file indicating an electronic signature of the provider added to the merge management information file. The signature information file is stored under the DiscID directory, with a file name "bumf.sf". The electronic signature in general is generated by calculating a hash value for information that needs to be protected from tampering, and encrypting the hash value by using a private key. With regard to the signature information file in the present embodiment, the hash value for the merge management information file is encrypted by using a private key corresponding to a public key in the disc root certificate stored in the BD-ROM.

Note that the disc root certificate is a certificate to be used in the authentication of the Java application and the authentication of the merge management information file. The disc root certificate includes a public key published by the provider. The disc root certificate provided by the provider is stored in the BD-ROM with a file name "discroot.crt". As the file format of the merge certificate, "X.509" is used, for example. The detailed specifications of X.509 are recited in CCITT Recommendation X.509 (1988), "The Directory-Authentication Framework" published by CCITT (Comite Consultatif International Telegraphique et Telephonique).

The additional content data file is a group of files for making addition/update to the original content recorded on the BD-ROM. The additional content data file is stored in the local storage with a file name written in the "8.3" format (the file name is composed of eight characters or less, and the extension is composed of three characters or less).

Among the three additional content data files shown in Fig. 6, the file "00001.mpl" stores the playlist information, the file "mo.bdm" stores the scenario program for the HDMV mode, and the file "00001.m2t" stores a digital AV stream.

Other than these files, any files that can be supplied within the BD-ROM to the users can be selected as the targets of the additional content data files to be recorded onto the BD-ROM.

Examples of such files that can be selected as the targets of the additional content data files include a file storing index.bdmv or clip information (a file with extension "clpi"), a Java archive file (a file with extension "jar"), and a file storing a BD-J object (a file with extension "bdjo").

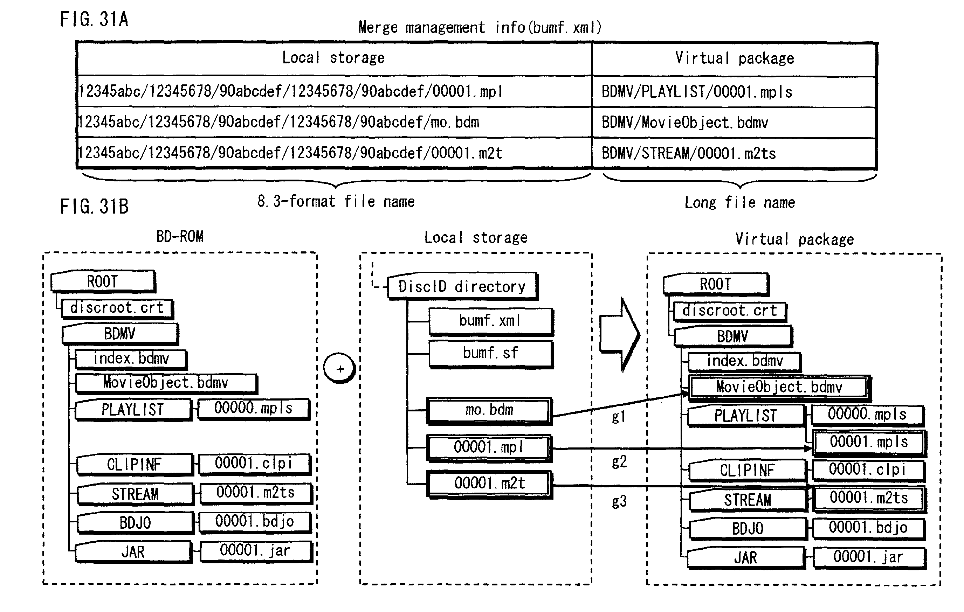

Fig. 31A shows the internal structure of the merge management information. In the merge management information shown in Fig. 31A, correspondence between the file path in the local storage and the file path in the virtual package is indicated with regard to three additional content data files: "00001.mpl"; "mo.bdm"; and "00001.m2t". The file path in the local storage conforms to the "8.3" format.

The merge management information file is characterized in that the directory and file names in the local storage conform to the "8.3" format in case a removable medium adopting a FAT-type file system is used as the local storage.

Since the Long File Name (LFN) is adopted in the files recorded on the BD-ROM, the files may have, for example, 10-character or 20-character file names, with 5-character or 6-character extensions. However, when the files are to be recorded onto a removable medium adopting a FAT-type file system, the file names, directory names, and extensions are restricted to eight characters, eight characters, and three characters at a maximum, respectively.

The merge management information file indicates correspondence between the file path in the local storage conforming to the "8.3" format and the file path in the virtual package in the LFN format. The file path in the virtual package conforms to the directory structure of the BD-ROM. This is because the virtual package is aimed to enable the files stored in the local storage to be treated in the same manner as the files stored in the BD-ROM.

The file system format of the BD-ROM corresponds to the LFN format. Accordingly, although the additional content data files in the local storage are in the "8.3" format, they are accessed by aliases, namely the file names of 255 characters or less, when the merge management information file is referenced. In this way, the merge management information file realizes an "alias access" in which file names of 255 characters or less can be used.

Here the description of the file paths shown in Fig. 31 will be described in detail. The file path "12345abc/12345678/90abcdef/12345678/90abcdef/00001.mpl" in the "8.3" format in the local storage is associated with the file path "BDMV/PLAYLIST/00001.mpls" in the LFN format in the virtual package. This example conforms to the example shown in Fig. 30, and indicates a path from the CertID directory to the additional content data file.

The file path "12345abc/12345678/90abcdef/12345678/ 90abcdef/mo.bdm" in the "8.3" format in the removable medium is associated with the file path "BDMV/MovieObject.bdmv" in the LFN format in the virtual package.

The file path "12345abc/12345678/90abcdef/12345678/ 90abcdef/00001.m2t" in the "8.3" format in the removable medium is associated with the file path "BDMV/STREAM/00001.m2ts" in the LFN format in the virtual package.

Fig. 31B shows how the BD-ROM contents are merged with the additional contents stored in the local storage, based on the contents of the merge management information. The left-hand side of Fig. 31B shows the contents of the BD-ROM; the middle portion of Fig. 31B shows the contents of the local storage; and the right-hand side of Fig. 31B shows the contents of the virtual package.

The merge management information file is set as shown in Fig. 31A. Thus, among the contents of the local storage, three additional content data files: "00001.mpl"; "mo.bdm"; and "00001.m2t", which exist in "12345abc/12345678/90abcdef/ 12345678/ 90abcdef" under the CertID directory, are combined with the directory structure of the virtual package described in the merge management information file, as indicated by the arrows g1, g2, and g3.

The above-mentioned combination of the files stored in the local storage with the directory structure described in the merge management information file is called "merge".

With such a merge, "mo.bdm" is accessed by an alias "MovieObject.bdmv" that is a file name of a file stored under the BDMV directory.

Also, "00001.mpl" is accessed by an alias "00001.mpls" that is a file name of a file stored under the PLAYLIST directory that is provided under the BDMV directory.

Furthermore, "00001.m2t" is accessed by an alias "00001.m2ts" that is a file name of a file stored under the STREAM directory that is provided under the BDMV directory.

When the "alias access" is available as described above, it is possible to treat "mo.bdm", "00001.mpl", and "00001.m2t" as if they exist at "BDMV/MovieObject.bdmv", "BDMV/PLAYLIST/00001.mpls", and "BDMV/STREAM/00001.m2ts", respectively.

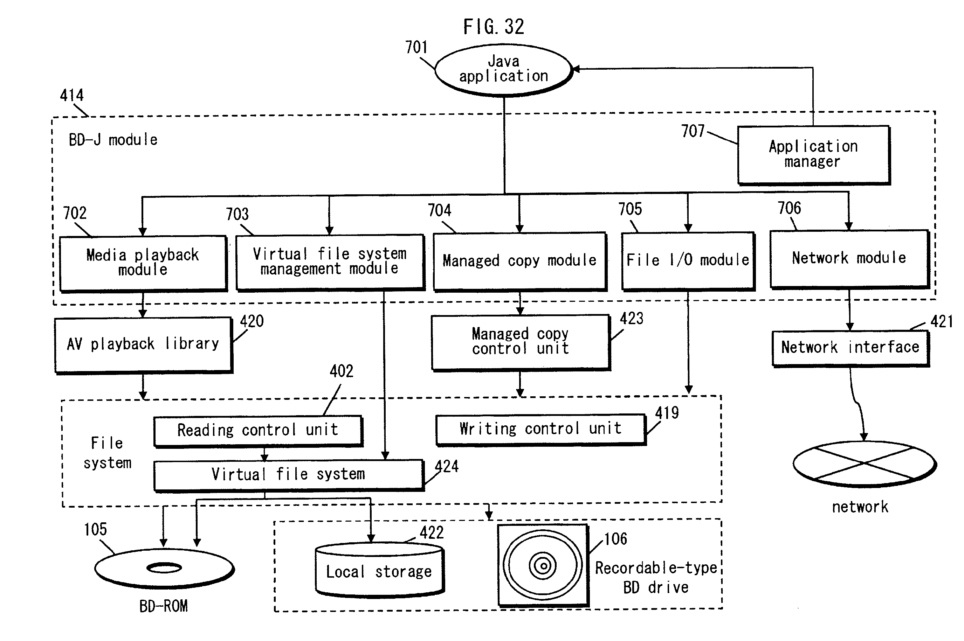

Fig. 32 shows a detailed structure of the BD-J module shown in Fig. 29. The BD-J module 414 includes a media playback module 702, a virtual file system management module 703, a managed copy module 704, a file I/O module 705, a network module 706, and an application manager 707.

Note that the AV playback library 420, the network interface 421, the local storage 422, the managed copy control unit 423, and the virtual file system 424 shown in Fig. 32 are the same as those shown in Fig. 29 and are shown in Fig. 32 for the sake of explanation of the media playback module 702 through application manager 707.

The application manager 707 manages the start and end of a Java application based on the application management information recorded on the BD-ROM. Also, the application manager 707 performs a process of receiving a UO event from the dispatcher 417 and passing the UO event to the Java application 701 currently in operation.

The media playback module 702 supplies an API for the media playback control to the Java application 701. When the Java application 701 calls the API for the media playback control, the media playback module calls a corresponding function from the AV playback library 420, and performs the AV playback control.

The network module 706 supplies an API for the network control to the Java application 701. In accordance with a network control request from the Java application 701, the network module 706 performs a network control using the network interface 421.

The Java application 701 can perform, by using the network module 706, a search for additional contents having been published, downloading, and an access to the server that is required for the managed copy authentication.

The file I/O module 705 deals with file access requests from the Java application 701 to media such as the BD-ROM, local storage, and recordable-type BD drive.

When the access request is a request to write an additional content data file, the Java application 701 can arrange the additional content data file at an appropriate location in the local storage by using the file I/O module. Also, it is possible to delete an additional content data file if it has become unnecessary, or edit an additional content data file directly. Accesses to the virtual package are performed via the file I/O module 705, although accesses to the virtual package are read-only. Writing through the file I/O module 705 is not possible.

When the access request is a request to read an additional content data file, the Java application 701 receives a file path to the BD-ROM in the LFN format, and searches the local storage for a file that can be accessed by the file path in the LFN format.

The search is made by judging whether or not the file path in the LFN format is written as an "alias file path" in the merge management information file.

When, as a result of the search, it becomes apparent that the local storage stores an additional content data file that can be accessed by an alias through the file path in the LFN format, the additional content data file is read from the local storage in accordance with a file path in the "8.3" format written in the merge management information file.

When the local storage does not store an additional content data file that can be accessed by an alias through the file path in the LFN format, the additional content data file that can be accessed by an alias through the file path in the LFN format is read from the BD-ROM. When the BD-ROM does not store an additional content data file that can be accessed through the file path in the LFN format, either, an error process is performed.

The managed copy module 704 supplies an API for the managed copy control to the Java application 701. The Java application 701 calls the API to obtain the copy source and copy destination media information that are required for the managed copy authentication, request the managed copy control unit to start copying, check the state of progress of the copying, and so on. These APIs will be described in detail later.

The virtual file system management module 703 receives a virtual package build/update request from the Java application 701, and conveys the contents of the request to the virtual file system 424. When building/updating a virtual package, the Java application 701 issues a build/update request specifying new merge management information file and signature information file.

Upon receiving the virtual package build/update request via the virtual file system management module 703, the virtual file system 424 verifies the signature added to the new merge management information file by using the newly specified signature information file. After this, the virtual file system 424 re-builds the virtual package by replacing the old merge management information file and signature information file with the new merge management information file and signature information file. The replacement of the merge management information file and signature information file is performed when switching between titles is performed.

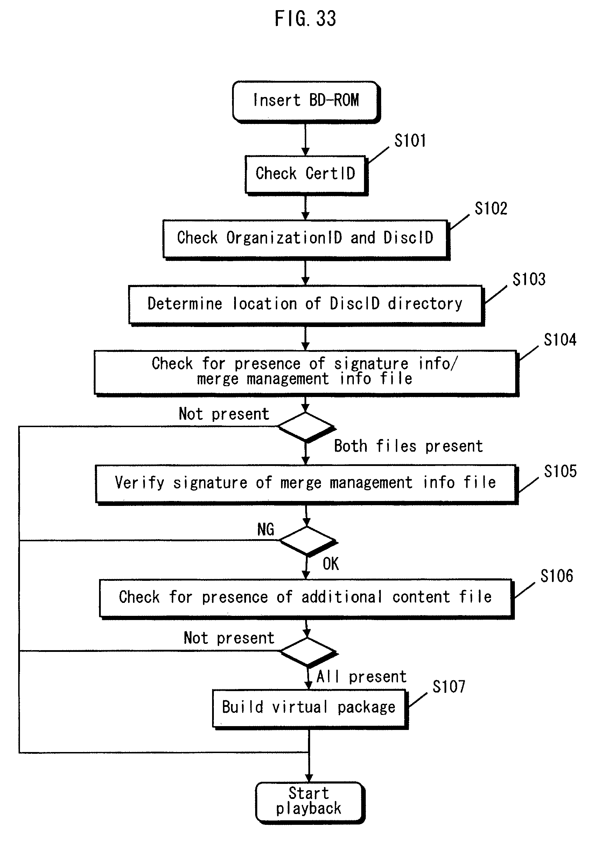

Fig. 33 is a flowchart showing the procedure after an insertion of the BD-ROM.

Upon insertion of a BD-ROM into the playback device, the virtual file system 424 refers to the "discroot.crt" file to check the CertID (S101). The virtual file system 424 then refers to the "index.bdmv" file to check the DiscID and the OrganizationID (S102), and determines a corresponding DiscID directory in the local storage (S103).

Next, the virtual file system 424 checks whether or not both the merge management information file and the signature information file exist in the DiscID directory corresponding to the inserted BD-ROM (S104).

When either or both of the files do not exist, the virtual file system 424 starts a playback using only the data stored in the BD-ROM, without building the virtual package. When both the merge management information file and the signature information file exist, the virtual file system 424 checks whether or not the merge management information file has been tampered with, by using the signature information file (S105).

When the signature verification performed in step S105 results in failure, the virtual package is not built and the playback is started by using only the data stored in the BD-ROM. When the signature verification performed in step S105 results in success, it is checked whether or not files indicated by the file paths listed in the merge management information exist in the local storage (S106).

When any of the files indicated by the file paths does not exist in the local storage, the building of the virtual package is stopped, and the playback is performed with only the data stored in the BD-ROM. When it has been confirmed that all files necessary for building the virtual package exist, the virtual file system 424 changes the attribute of the files to "read-only". The virtual package is build by merging the additional content data files stored in the DiscID directory with the contents stored in the BD-ROM based on the contents of the merge management information (S107).

The virtual package exists virtually. In the actuality, some of the files constituting the virtual package are files stored in the local storage, and the other files are files stored in the BD-ROM.

It should be noted however that the HDMV module 413, which is the application layer (the fourth layer in Fig. 3), and the BD-J module 414 reference the files as if all of the files exist in the BD-ROM. The virtual file system 424 monitors the references from the application layer to the BD-ROM, and when a path to a file in the reference destination matches a file path in the virtual package written in the merge management information, the virtual file system 424 changes the reference destination to a file in the local storage written in the corresponding file path.

That is to say, even if, in the actuality, a file stored in the local storage is a file with a file name in the "8.3" format, the application layer can treat it as a long file name.

Next, the building/updating of the virtual package after the playback is started by an insertion of a BD-ROM will be described.

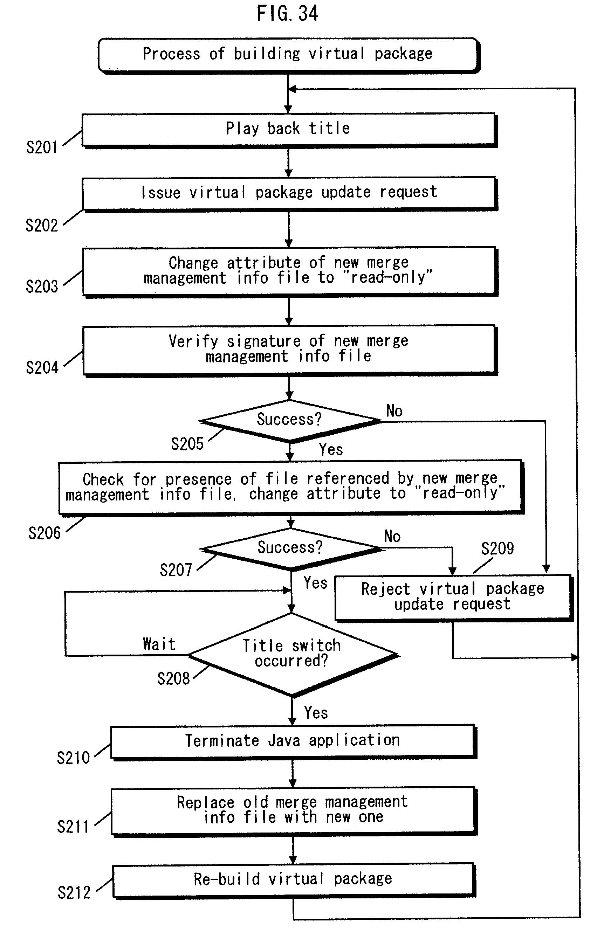

Fig. 34 is a flowchart showing the procedure of re-building the virtual package by replacing the old merge management information file and signature information file with new ones when switching between titles is performed.

A title of the BD-J mode starts to be played back (S201). During the playback, the Java application issues a virtual package update request (S202). The values of the arguments that are specified when the virtual package update request is issued are a file path indicating the location of the new merge management information file, and a file path indicating the location of the signature information file corresponding to the new merge management information file.

Upon receiving the virtual package update request, the virtual file system 424 changes its state to "update in preparation", and changes its attribute to "read-only" so that the specified new merge management information file cannot be re-written (S203). The virtual file system 424 then verifies the signature added to the new merge management information file by using the signature information file specified when the virtual package update request is issued (S204).

When the signature verification performed in step S204 results in failure (No in step S205), the virtual file system 424 stops the virtual package update request. And the virtual file system 424 returns the attribute of the new merge management information file from "read-only" to the previous attribute before the issuance of the virtual package update request, and issues a virtual package update request rejection notification event to the Java application (S209).

When the signature verification performed in step S204 results in a success (Yes in S205), the virtual file system 424 detects files that are stored in the local storage and referenced by the new merge management information file, and changes the attributes of the detected files to "read-only" for the Java application (S206).

When the files that are referenced by the new merge management information file and necessary for building the virtual package are not stored in the local storage (No in S207), the virtual file system 424 stops the virtual package update process. The virtual file system 424 then return the attributes of the files having been changed in steps S203 and S206 to the previous ones before the issuance of the virtual package update request, and issues a virtual package update request rejection notification event to the Java application (S209).

When the process of detecting the files that are stored in the local storage and referenced by new merge management information file and changing their attributes to "read-only" is completed (Yes in S207), the virtual file system 424 sets the state of the virtual file system to "update preparation completed", and issues an update preparation completion notification event to the Java application.

After the state of the virtual file system is changed to "update preparation completed", the process waits for an occurrence of a title switch. When a title switch occurs (Yes in S208), the Java application having been activated on the former title that was switched to the new title is terminated (S210). After this, when there is an old merge management information file, it is overwritten with a new merge management information file for the replacement between new and old merge management information files (S211).

When there is no old merge management information file because the update of the virtual package was started while the original BD-ROM was being played back, the new merge management information file is moved into the DiscID directory corresponding to the DiscID of the inserted BD-ROM, instead of the replacement between new and old merge management information files, and is renamed to a formal merge management information file name. At the same time, with respect to the signature information files, replacement between new and old files and movement of the files are performed.

After the replacement between new and old files and movement of the files are completed with respect to the new and old merge management information files and signature information files, the virtual file system 424 re-builds the virtual package based on the new merge management information file (S212).

After the re-building of the virtual package, the files that are stored in the local storage and being referenced by the old merge management information file but not by the new merge management information file are removed of the "read-only" attribute, and become readable/writable from the Java application. With respect to the files that are stored in the local storage and being referenced by the old and new merge management information files, the attributes thereof are maintained to be "read-only".

After the virtual package is re-built, the new title after the title switch starts to be played back by using the newly re-built virtual package (S201). With respect to the merge management information file corresponding to the virtual package being played back and the files that are stored in the local storage and being referenced by the merge management information file, the attributes thereof are always "read-only" and the files cannot be edited or deleted by the Java application while the virtual package is played back.

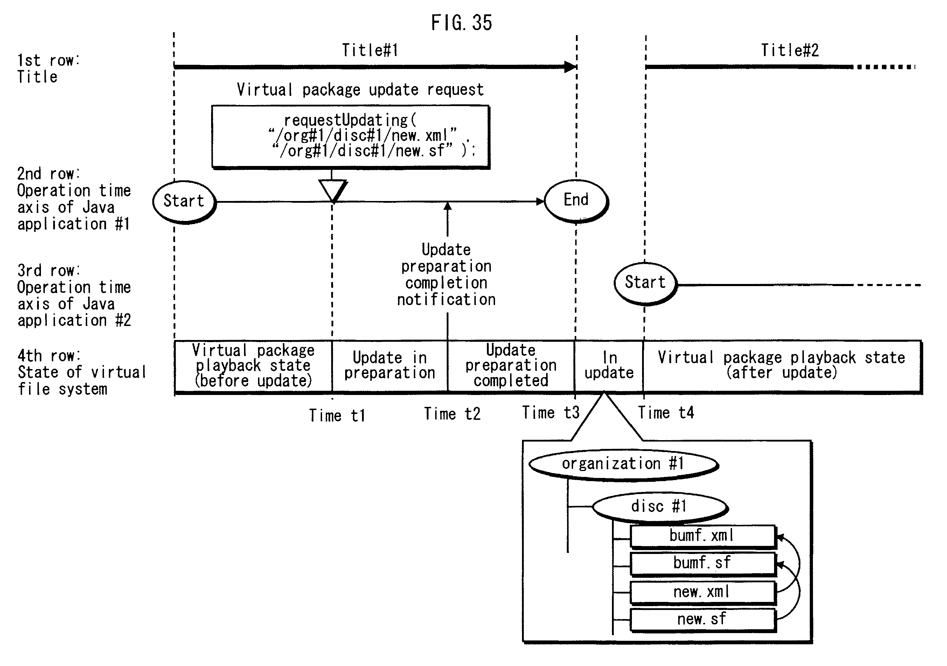

Fig. 35 shows the flow of processing in a time sequence from the issuance of the virtual package build/update request by the Java application to the update of the virtual package.

The first row of Fig. 35 shows a playback time axis of titles. The second row shows the operation time axis of application #1. The third row shows the operation time axis of application #2. The fourth row is a time axis indicating how the state of the virtual file system transfers.

In Fig. 35, it is presumed that, in the initial state, the storing of a new merge management information file and signature information file is completed. That is to say, it is presumed here that, in the initial state, an additional content and a new merge management information file and signature information file, which are different from the merge management information file and signature information file that are being used to build the current virtual package, have been downloaded from a server on the Internet and stored in the local storage.

At time point t1 during the playback of title #1, the Java application 701 requests the virtual file system 424 to perform building/updating of a virtual package, via an API provided by the virtual file system management module 703.

The requestUpdating("/org#1/disc#1/new.xml", "/org#1/disc#1/new.sf") shown in Fig. 35 indicates an API call being the virtual package update request. The arguments "/org#1/disc#1/new.xml" and "/org#I/disc#1/new.sf" in the virtual package update request are file paths that indicate locations of the new merge management information file and signature information file stored in the local storage. The time point t1 indicates a time point at which the update request is made.

Also, at time point t1, the virtual file system 424 receives the virtual package update request and changes its state to "update in preparation".

When the state is "update in preparation", the process of changing, to "read-only", the attributes of the specified new merge management information file and the files that are stored in the local storage and referenced by the new merge management information file is performed. Also, the signature verification of the new merge management information file is performed by using the signature information file, which was specified by the Java application 701 when the virtual package update request was issued. Furthermore, it is checked whether or not all the files indicated in the file storage location information of the new merge management information file are stored in the specified locations.

At time point t2, the check on whether or not the files are stored in the specified locations is completed and the state of the virtual file system 424 is set to "update preparation completed". In this way, the state is caused to transfer, and an update preparation completion notification event is issued to the Java application. When the signature verification of the new merge management information file or the check on whether or not the files are stored in the specified locations results in a failure, the virtual file system 424 rejects the update request, and issues an update request rejection notification event to the Java application 701 via the virtual file system management module 703. The virtual file system 424 also returns its state from "update in preparation" to the previous one ("virtual package playback state" or "BD-ROM playback state").

The "virtual package playback state" indicates a state in which the BD-ROM having been loaded in the playback device is being played back as a virtual package by the virtual file system 424, and there is no virtual package update request being currently suspended. The "BD-ROM playback state" indicates a state in which the BD-ROM having been loaded in the playback device is being played back as the original BD-ROM, and there is no virtual package update request being currently suspended.

At time point t3, the state of the virtual file system 424 becomes "in update". When a title switch occurs, the virtual file system 424 replaces the old merge management information file with the new merge management information file by overwriting the old merge management information file (the merge management information file currently being used to build the virtual package) with the new merge management information file that was specified when the virtual package update request was issued.

When there is no old merge management information file because the update of the virtual package was started while the original BD-ROM was being played back, the new merge management information file is moved into the DiscID directory corresponding to the DiscID of the inserted BD-ROM, instead of overwriting the old with the new merge management information file. With this process, the new merge management information file is renamed to a formal merge management information file name (bumf.xml).

With respect to the signature information files, replacement between new and old files is performed, as well. After the replacement between new and old files and movement of the files are completed with respect to the new and old merge management information files and signature information files, the virtual file system 424 re-builds the virtual package based on the new merge management information file stored under the DiscID directory corresponding to the DiscID of the inserted BD-ROM, and updates the file structure of the virtual package.

At time point t4, the update is completed, the virtual file system 424 enters the "virtual package playback state". Even after the virtual package is updated, the attributes of the files that are stored in the local storage in the locations indicated by the file storage location information of the old and new merge management information files remain to be "read-only" while the virtual file system 424 is in the "virtual package playback state". However, the files that are being referenced by the old merge management information file but not by the new merge management information file are removed of the "read-only" attribute, and become readable/writable from the Java application.

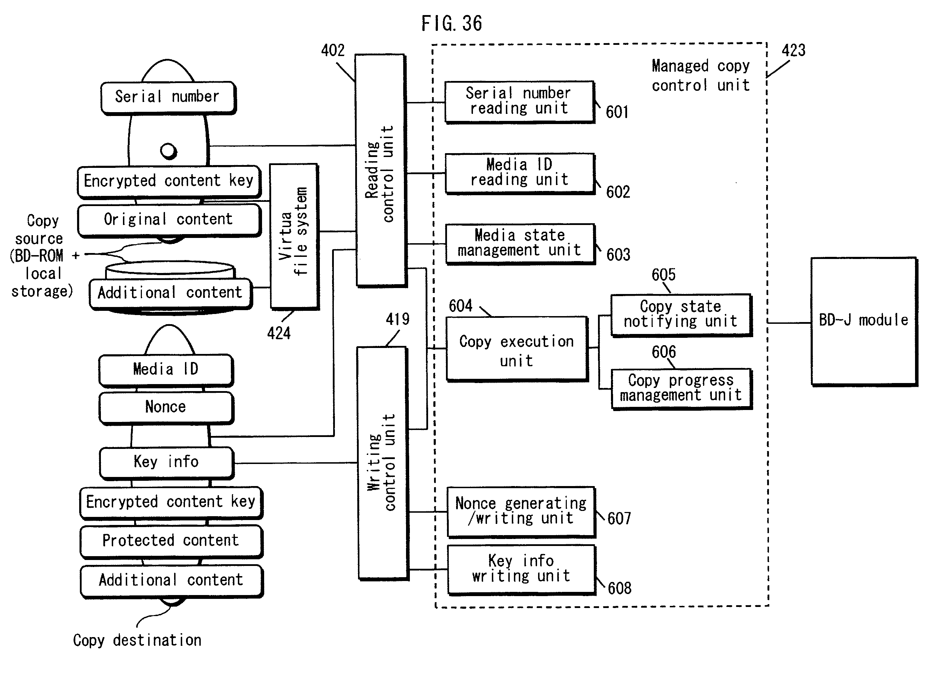

Fig. 36 shows the managed copy control unit 423 in Embodiment 4 in detail.

The managed copy control unit 423 is composed of a serial number reading unit 601, a media ID reading unit 602, a media state management unit 603, a copy execution unit 604, a copy state notifying unit 605, a copy progress management unit 606, a nonce generating/writing unit 607, and a key information writing unit 608.

The serial number reading unit 601 reads a PMSN (Pre-recorded Media Serial Number) indicating a physical serial number of a recording medium, the PMSN being recorded in a BCA (Burst Cutting Area), a special area provided on the BD-ROM. The serial number is used when the key information is generated, as will be described later.

The media ID reading unit 602 reads a media ID from a copy destination medium, the media ID being information uniquely assigned to each medium. In general, the value of the media ID cannot be rewritten, and different values are assigned to the respective media even if they are of a same type. The media ID is also used when the key information is generated.

The media state management unit 603 manages a list of media types that can be used as copy destinations by the playback device. For example, suppose that the playback device is equipped with an SD card slot and a recordable-type BD-drive, and that, currently, only an SD card is inserted, then it is judged that the SD card is available as a copy destination. On the other hand, when both an SD card and a BD-R are inserted, it is judged that both the SD card and the BD-R are available as copy destinations. The media state management unit 603 further manages the free capacity of the copy destination media.

The copy execution unit 604 performs a data copy from the BD-ROM to another medium. If the virtual package has been built when the data copy starts to be performed, the data stored in the local storage becomes the copy target as well. That is to say, if data is read from the BD-ROM via the virtual file system 424, the virtual package, in which the files stored in the BD-ROM have been merged with the files stored in the local storage, is written onto the copy destination medium as it is. Also, the copy execution unit 604 may re-encode a stream depending on the copy destination medium.

The copy state notifying unit 605 manages the transfer among the states such as a copy start, a normal end, and an abnormal end, and notifies the Java application of a state transfer via the BD-J module.

The copy progress management unit 606, while data is copied, manages the number of bytes to be copied and the number of bytes having been copied, and notifies information of the current progress in the copy in response to a request from the Java application.

The nonce generating/writing unit 607 generates and writes a random number (nonce) each time a managed copy is performed. The value of the nonce is also used when the key information is generated.

The key information writing unit 608 writes the key information that is generated from the serial number of the BD-ROM, the media ID of the copy destination medium, and the nonce. The key information is generated based on the private key held by the server.

Upon obtaining the serial number, media ID, and nonce, the Java application transmits those values to the server.
Upon obtaining the serial number, media ID, and nonce, the Java application transmits those values to the server. The server generates the key information based on the values transmitted from the Java application and the private key that is managed by the server, and sends the generated key information to the Java application.

The Java application sets the key information received from the server into the key information writing unit 608. The key information writing unit 608 writes the set key information onto the copy destination medium. The key information is used to decrypt an encrypted content key. When the encrypted content key is decrypted, a playback of a protected content becomes possible. That is to say, without the key information, it is impossible to play back the protected content on the copy destination medium even if the encrypted content key and the protected content are copied, in an unauthorized manner, from the BD-ROM to the copy destination medium.

The managed copy control unit 423 is composed of the above-described structural elements. In order for the Java application to control the operation of the structural elements, the BD-J module is supplied with managed copy control APIs. The following describes the managed copy control APIs.
(1) ManagedCopy#getPMSN()
   This API returns the serial number of the copy source medium.
(2) ManagedCopy#getMCMediaInfoList()
   This API returns a list of media that are supported as copy destinations by the playback device, inserted in the device, and currently usable as copy destinations.
(3) ManagedCopy#setCopyInfo(byte[])
   This API sets the copy management information that is sent from the server together with the key information. The copy management information indicates a list of copy-target files, copy-available resolutions, copy available/not available in the virtual package state, and so on.
(4) ManagedCopy#startMC(MCMediaInfo)
   This API starts copying data to the medium specified by the argument.
(5) MCMediaInfo#getMediaType()
   When this API is called for each element of the copy destination list obtained by the "getMCMediaInfoList()", this API returns types of the media (such as BD-R, BD-RE, SD, HDD, and DVD-R).
(6) MCMediaInfo#getUniqueId()
   This API returns a byte sequence including the media ID and nonce of the copy-destination medium. The nonce of the copy-destination medium starts to be generated and written immediately after this API is called. Nonce may not exist depending on the type of the medium. In that case, this API returns only the media ID.
(7) MCMediaInfo#setSignature(byte[])
   This API sets the key information to be written to the copy destination. When a data copy is started, a value having been set by this API is written to the copy destination as the key information.
(8) MCMediaInfo#getFreeSpace()
   This API returns the free capacity of the copy destination.
(9) MCMediaInfo#getRequiredSpace(byte[])
   This API returns, based on the copy management information specified in the argument, a capacity of the copy destination required for the data copy.
(10) MCMediaInfo#addMCListener(MCListener)
   This API registers listeners who are to receive the state transfer notification of the managed copy. When a state transfer, such as a start of the managed copy, a normal end, or an abnormal end, occurs, this API notifies the state transfer to the listeners having been registered with this API.
(11) MCProgress#getMCProgress()
   This API returns progress information that includes the number of bytes remaining to be copied and the number of bytes having been copied in the managed copy.

This completes explanation of the APIs.

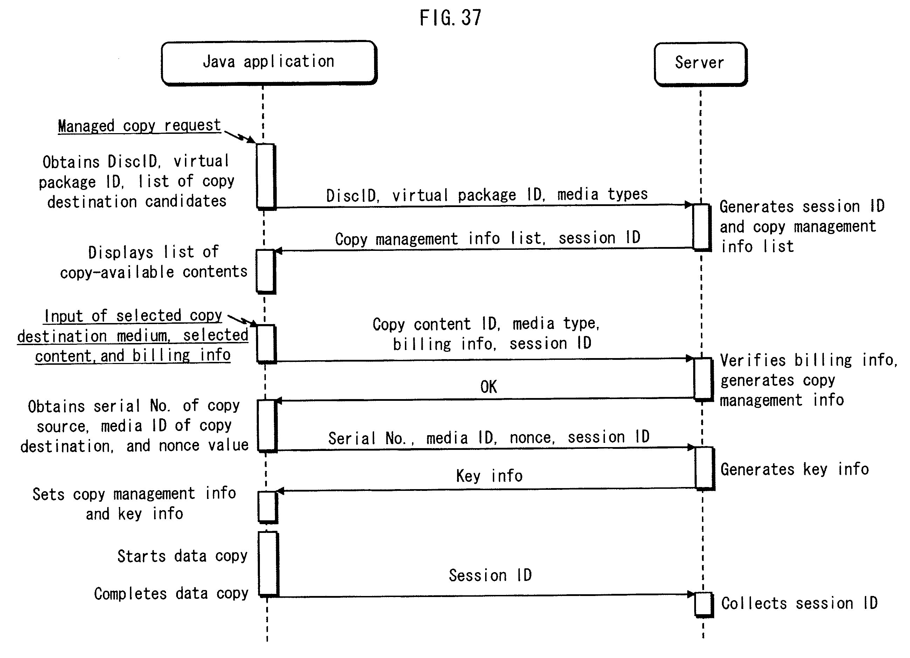

Fig. 37 shows data transmissions/receptions between the Java application and the server.

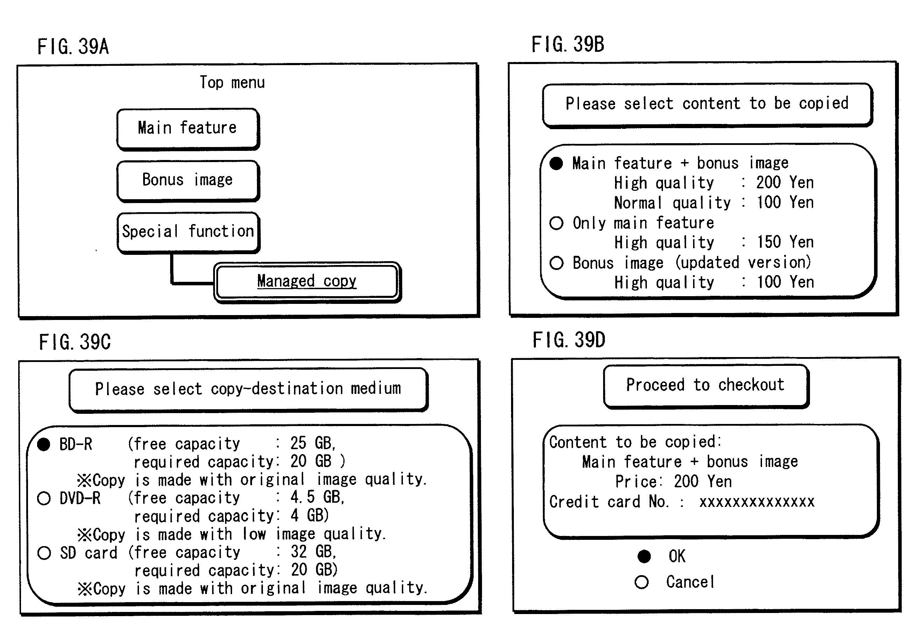

First, the user selects the managed copy on the menu screen or the like (Fig. 39A shows one example of the screen displayed for the selection). With this selection, the managed copy process is started.

The Java application transmits, to the server, the DiscID written in the BD management information (index.bdmv), the virtual package ID written in the merge management information file (bumf.xml), and the list of types of media being candidates for copy destinations that is obtained by calling the "MCMediaInfo#getMediaType()". The server generates a copy management information list and a session ID from the received information and returns them back to the Java application.

Note that the Java application may transmit a list of current file structures of the virtual package to the server, instead of the virtual package ID. The server can identify the current state of the virtual package from the received file structures. Also, when the current file structure is not the virtual package, a null value is transmitted to the server as the virtual package ID.

The session ID is used by the server side to manage the state of progress in the communication that has been started between the server and the Java application. For example, in the case where the server has received a request for key information when the billing process has not been processed, the server can check the session ID and judge that the billing process has not been completed in the current session, and reject the request for key information.

The copy management information list includes a copy content ID which is an identifier assigned to uniquely identify the content of the copy, content information written in a character sequence that can be understood by the user, a list of files (or directories) to be copied, media types available as copy destinations, information indicating whether copying of a virtual package is available (virtual package state), a resolution available for the copy, a capacity required for the copy, and price information.

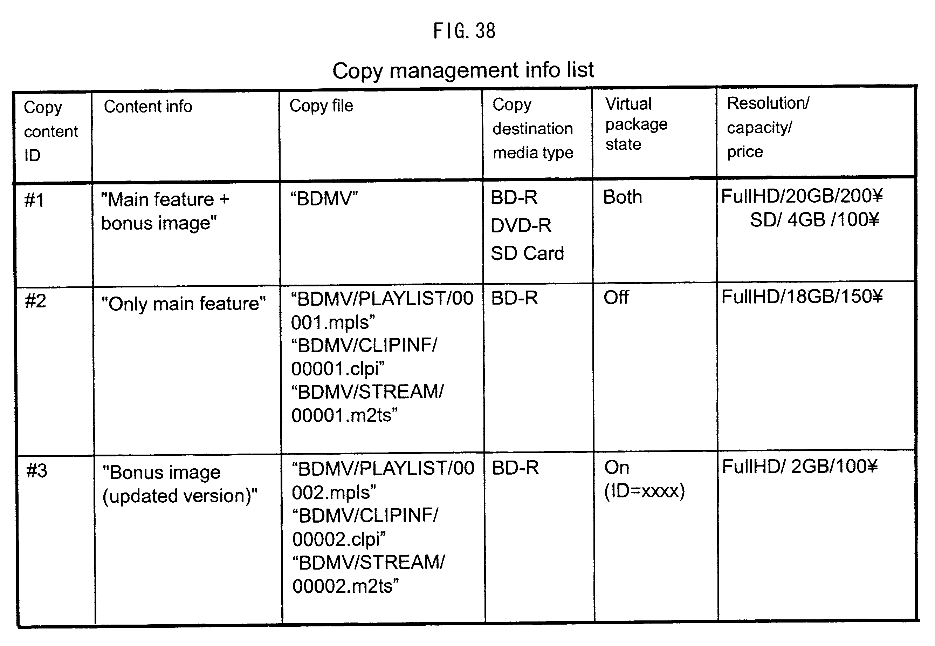

Fig. 38 shows one example of the copy management information list. Note that, when a directory is specified as a file to be copied, it indicates that all files existing under the directory are copy targets.

The virtual package state is set as: "Both" when the copy of both the original BD-ROM and the virtual package are permitted; "Off" when the copy of only the original BD-ROM is permitted; and "On" when the copy of only the virtual package is permitted. When the virtual package state is set as "On", the virtual package ID of the virtual package permitted to be copied is specified as well. When every virtual package is permitted to be copied, the ID is specified as "ID=ALL".

The Java application presents on the screen, for the user, detailed information of the contents that can be copied, based on the copy management information list (Fig. 39B shows an example of the screen). When there are a plurality of copy destination candidates, the plurality of copy destination candidates are presented for the user (Fig. 39C shows an example of the screen).

The Java application determines the content to be copied and the copy destination medium, based on the selection made by the user. In so doing, the Java application may compare the free capacity obtained by calling the "MCMediaInfo#get FreeSpace()" with the required capacity written in the copy management information, and when there are any candidates not having a sufficient free capacity, it may take off such candidates from the list, or issue a warning to the user.

When the content to be copied and the copy destination medium are determined, and the content to be copied is subject to fees, the user is required to input billing information (Fig. 39D shows an example of the screen). The billing information may be, for example, a credit card number or a user ID. When no billing is required, the input of the billing information may be omitted, or only the counted number of copies may be checked. After the user completes the input of the billing information, the Java application transmits, to the server, the copy content ID, media type of the copy destination, billing information, and session ID corresponding to the content selected by the user. Upon judging that these data are correct, the server returns OK to the Java application.

Upon receiving the OK notification from the server, the Java application obtains element data of the key information. The element data of the key information are the serial number of the copy source, media ID of the copy destination, and nonce.

Note that the serial number of the copy source is obtained by calling the "ManagedCopy#getPMSN()". The media ID of the copy destination and the nonce value are obtained by calling the "MCMediaInfo#getUniqueld()" for the corresponding copy destination medium.

Upon receiving the serial number, copy destination, media ID, nonce, and session ID from the Java application, the server generates key information from (i) the element data of the received key information and (ii) the private key held by the server, and returns the key information to the Java application.

Upon receiving the key information from the server, the Java application passes a piece of copy management information of the copy target and the key information to the managed copy control unit. These information are passed as follows. In order for the copy management information to be passed to the managed copy control unit, the "ManagedCopy#set CopyInfo(byte[])" is called, with the key information specified in the argument thereof. In order for the key information to be passed to the managed copy control unit, the "ManagedCopy#setSignature(byte[])" is called, with the key information specified in the argument thereof.

Upon completion of the passing of the copy management information and the key information, the "ManagedCopy#startMC(MCMediaInfo)" is called to cause the managed copy control unit to start the data copy.

During the data copy performed by the managed copy control unit, the Java application can grasp the progress of the copying by calling the "MCProgress#getMCProgress()".

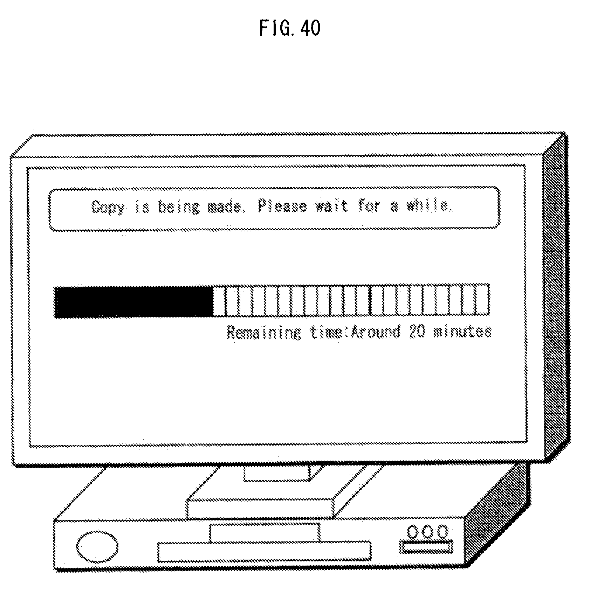

Fig. 40 shows one example of the screen indicating the progress of the copying. The Java application obtains the number of bytes remaining to be copied and the number of bytes having been copied and determines an approximate remaining time of the copying.

When the "MCMediaInfo#addMCListener()" is called to register the listeners who are to receive the state transfer notification of the managed copy, the listeners can receive copy start and end notifications. By making use of it, a progress bar and/or advertisement of a new work may be displayed for a period before the copy end notification is received. Other than these, a simple game application may be run, for example.

Also, it is possible to issue a copy failure notification when a copy failure occurs. When, for example, a copy fails because the medium has been forcibly removed from the device, the Java application may receive a copy failure notification and then perform a process connected therewith, such as canceling the billing process.

When the registered listeners have received the copy end notification, the Java application judges that the managed copy is completed and transmits the session ID of the completed managed copy to the server. Upon receiving the session ID, the server judges that the managed copy of this session is completed and collects the session ID.

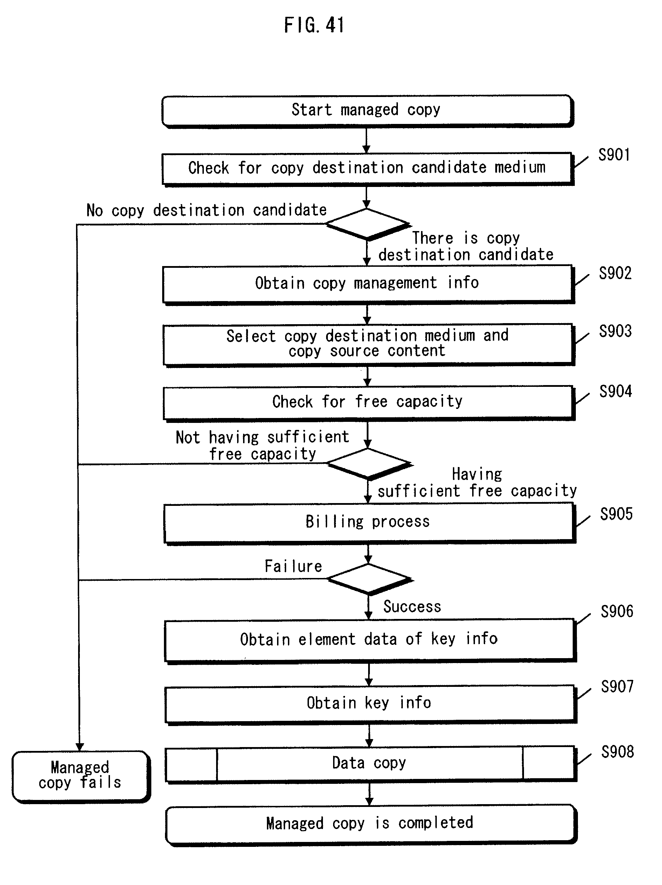

Fig. 41 is a flowchart of the managed copy control performed by the Java application.

First, the Java application calls the "ManagedCopy#getMCMediaInfoList()" to check whether or not currently there are media that can be candidates for copy destinations (S901). When it judges that there are copy destination candidate media, the Java application transmits the DiscID, virtual package ID, and a list of media types of the copy destination candidate media to the server. The Java application then receives, from the server, the copy management information list, which was generated by the server based on the information that had been transmitted to the server, and the session ID from the server (S902).

Upon obtaining the copy management information list, the Java application selects a copy destination medium and copy source content based on the copy management information list (S903). As the method for the selection, the Java application itself may select them, or it may present a list of copy-available contents and media to the user and cause the user to select. Figs. 39B and 39C show examples of lists of copy-available contents and media presented to the user.

Note that the free capacity may be checked by calling the "MCMediaInfo#getFreeSpace()" and the free capacity may be displayed as well as the media names. Also, the capacities required for the copy destination media written in the copy management information list may be displayed, as well. Furthermore, the required capacity written in the copy management information list may not be displayed as it is, but the required capacity may be calculated from the file size of the copy source, and the value obtained as a result of the calculation may be displayed as well.

The calculation of the capacity required for the copy may be performed by the Java application. Alternatively, the Java application may refer to the result of the calculation performed by the playback device. In particular, when the copy is performed with the virtual package or when a stream is to be preserved after it is re-compressed, the file size and the number of files change. Thus in such a case, it is more efficient for the playback device to calculate the required capacity.

The Java application can call the "MCMediaInfo #getRequiredSpace()" to obtain the value of the required capacity calculated by the playback device. When both the original BD-ROM and the virtual package are supported for the copying, namely when the virtual package state of the copy management information is set as "Both", the "MCMediaInfo #getRequiredSpace()" returns two values as: the capacity required for copying with the original BD-ROM; and the capacity required for copying with the virtual package.

It is checked whether or not the copy destination medium having been selected in step S903 has a sufficient free capacity for the copy (S904). For this check, the "MCMediaInfo #getFreeSpace()", the "MCMediaInfo#getRequiredSpace()" and the like are used.

When it is judged that the copy destination has a sufficient free capacity, the billing process is performed (S905). The billing process mentioned here refers to a series of processes for connecting to the server and performing authentication on the credit card number and the like. It should be noted here that, if the billing is not necessary, step S905 may be skipped or only the counted number of copies may be checked.

When the billing process is successfully performed, the element data of the key information is obtained (S906). Note here that the element data of the key information are: the serial number of the copy source medium; media ID of the copy destination medium; and nonce. When the obtainment of the element data of the key information is completed, the element data are transmitted to the server. The server generates key information from (i) the received element data of the key information and (ii) the private key held by the server, and transmits the generated key information to the Java application. Upon receiving the key information from the server, the Java application passes the key information and copy management information to the managed copy control unit (S907).

These information are passed as follows. In order for the copy management information to be passed to the managed copy control unit, the "ManagedCopy#set CopyInfo(byte[])" is called, with the key information specified in the argument thereof. In order for the key information to be passed to the managed copy control unit, the "ManagedCopy#setSignature(byte[])" is called, with the key information specified in the argument thereof.

Upon completion of the passing of the copy management information and the key information, the API "ManagedCopy#startMC(MCMediaInfo)" is called to cause the managed copy control unit to start the data copy (S908).

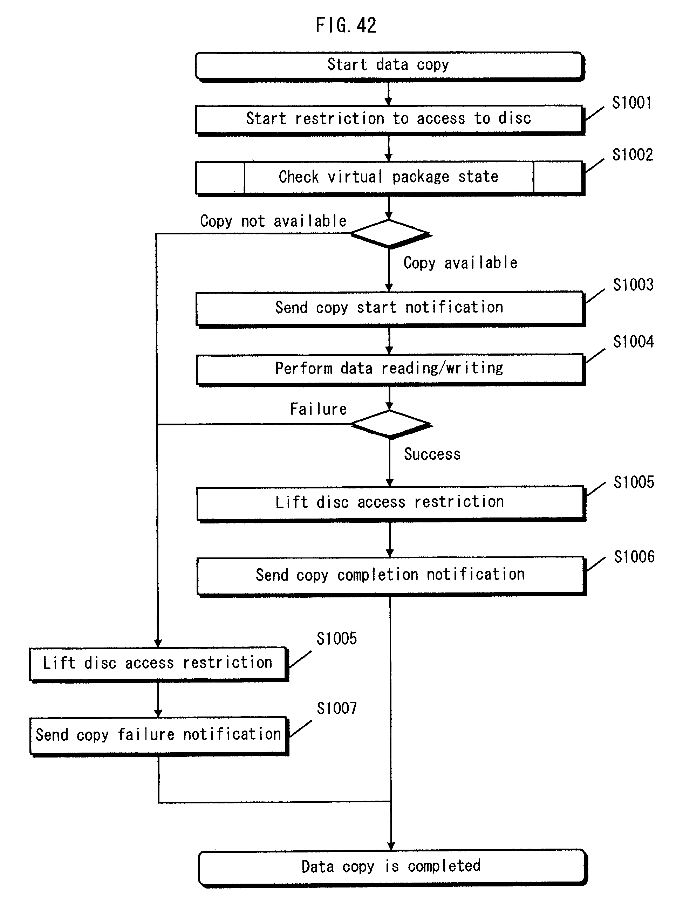

Fig. 42 is a flowchart of the data copy performed by the managed copy control unit. This flowchart shows details of step S908 shown in Fig. 41.

Before the data copy by the managed copy control unit is started, a restriction to access to disc by the Java application is started (S1001). The reason for imposing the restriction to access to disc by the Java application is to prevent the copy from failing due to a shortage of resource which may occur when the process by the managed copy control unit, the file I/O process by the Java application, and the stream decoding process are performed simultaneously. The imposing of the restriction to access to disc by the Java application makes it possible for the managed copy control unit to use exclusively the file system, decoder, encoder and the like.

After the disc access restriction is started, it is checked whether the current playback state is the original BD-ROM or the virtual package and whether or not the copy target content supports the virtual package (S1002). Then the virtual package is built depending on the check result. When the virtual package state of the copy management information is set as "On", and a virtual package ID is specified, and the specified virtual package ID differs from the current virtual package ID, it is determined that the copy is not available and that the data copy results in a failure.

When the virtual package state of the copy management information is set as "Both", "Off', or "On" and the specified virtual package ID is identical with the current virtual package ID, it is determined that the copy is available and a copy start notification is sent to the Java application (S1003). After the copy start notification is sent, reading of data from the copy source and writing of data to the copy destination are started (S1004). When the reading and writing of the copy-target data is completed, the disc access restriction having been imposed in step S1001 is lifted (S1005), a copy completion notification is sent to the Java application (S1006), and the copy process by the managed copy control unit ends. Also, when the copy performed in step S1005 fails halfway through, the disc access restriction is lifted, and a copy failure notification is sent to the Java application.

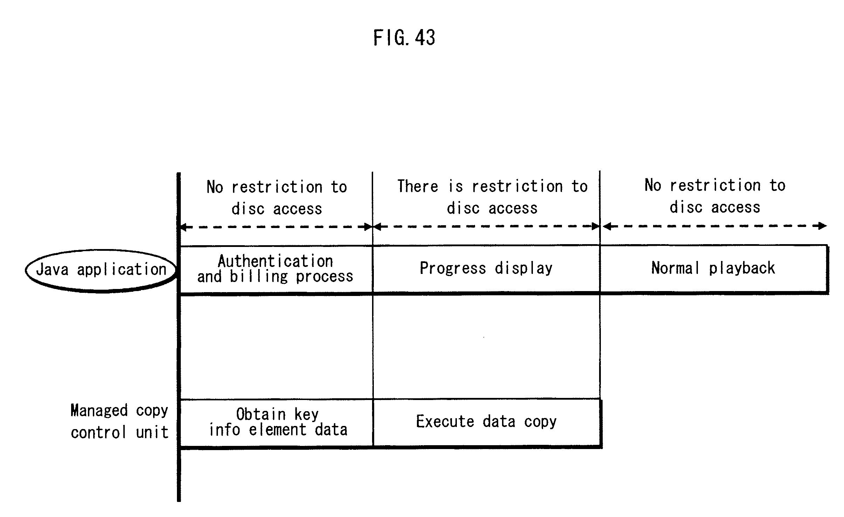

Fig. 43 shows the disc access restriction imposed during the copy. Before a copy by the managed copy control unit is started, the Java application can play back a stream by calling the media playback module 702, or access a file in the BD-ROM by calling the file I/O module 705.

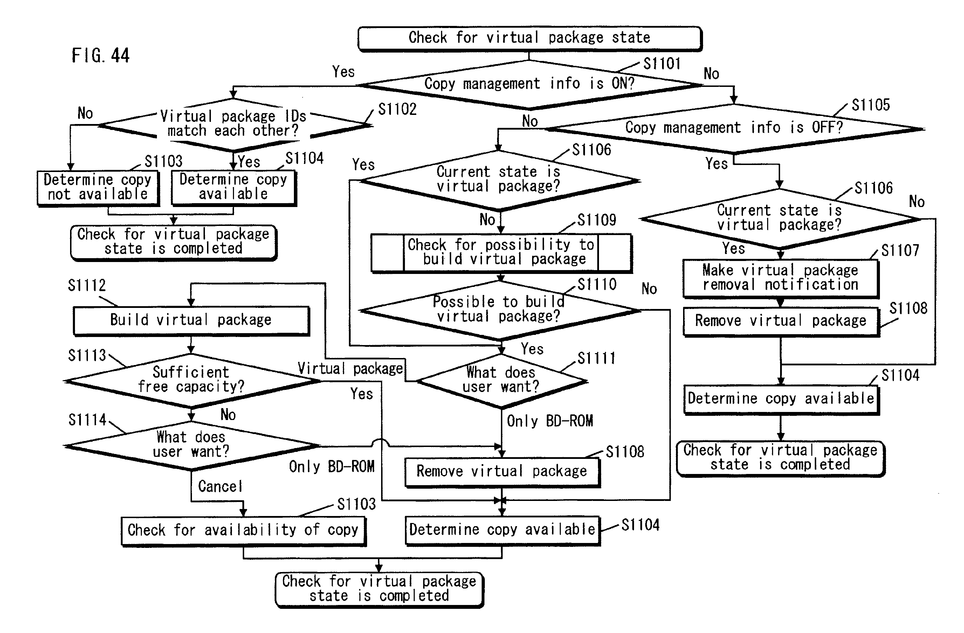

On the other hand, after a copy by the managed copy control unit is started, restrictions are imposed on the stream playback by the media playback module 702 and on the file access by the file I/O module 705, as shown in Fig. 44. During the copy, restrictions are imposed on the Java application as if a disc has been removed virtually.

However, even if the device enters the state as if a disc has been removed virtually and access to the disc becomes unavailable, the image data stored in the cache memory can be used and the connection to the server via the network interface is available, and thus a simple game and display of an advertisement are available. The restrictions are lifted when the copy by the managed copy control unit is completed.

The Java application can recognize not only the start/end of the copy, but also the start/end of the disc access restriction by calling the "MCMediaInfo#addMCListener()" to register the listeners who are to receive the state transfer notification of the managed copy. Note that, with a start/end of a copy, the Java application recognizes a virtual disc removal/insertion. Accordingly, to indicate the Java application that an actual disc was removed, a disc removal notification may be sent to the Java application at the start of a copy, as well as the copy start notification. Similarly, at the end of a copy, a disc insertion notification may be sent to the Java application, as well as the copy end notification.

The following describes how the file I/O module 705 enters the state in which it rejects the playback request from the Java application.

Since an operation system such as Linux is adopted in the playback device, the playback device assigns the BDMV directory to a drive of the BD-ROM 105 (copy-source medium) by issuing "/mount point BD/BDMV" command. Also, the playback device assigns the BUDA directory to the removable medium 104 (copy-destination medium) by issuing "/mount point SD/BUDA" command. With these mount operations, a read-only BD, a local storage, and a recordable-type BD are assigned to a virtual file system so that they can be used by the Java application. When an unmount operation, namely an operation for removing the mount, is executed, the Java application becomes unable to recognize the read-only BD, local storage, and recordable-type BD via the virtual system. Thus, with execution of the unmount operation, it is possible to cause the file I/O module 705 to enter the state in which it rejects the playback request from the Java application.

Next, it is described how the media playback module 702 enters the state in which it rejects the playback request from the Java application. The Java application plays back a playlist by generating a Java Media Framework (JMF) player instance. The JMF player instance is generated when the media playback module 702 creates the JMF player instance upon receiving an instruction for generating a JMF player instance with the playlist information file specified therein. On the other hand, when the media playback module 702 returns an error without generating a JMF player instance with the playlist information file specified therein, in response to an instruction for generating the JMF player instance, the request by the Java application is not accepted. Accordingly, when the media playback module 702 has entered the state in which it rejects the playback request from the Java application, it does not generate the JMF player instance even if it receives a request to do so from the Java application.

Next, the use of the "MCMediaInfo#addMCListener (MCListener)" by the file I/O module 705 and the media playback module 702 will be supplemented.

In order to cause, at the start of the managed copy, the file I/O module 705 and the media playback module 702 to enter the state in which they reject the request from the Java application, the file I/O module 705 and the media playback module 702 are caused to call the "MCMediaInfo# addMCListener(MCListener)" to register listeners, who are to receive the state transfer notification of the managed copy, in the file I/O module 705 and the media playback module 702.

With the operation, the start of the managed copy by the managed copy control unit is notified to the event listeners of the file I/O module 705 and the media playback module 702. And when the start of the managed copy is notified to the event listeners, the file I/O module 705 and the media playback module 702 enter the state in which they reject the request from the Java application. Then when a request for file access or generation of JMF player instance is made by the Java application, the file I/O module 705 and the media playback module 702 return an error response with regard to the request. With this arrangement, it does not happen that the managed copy control and the Java application compete against each other on the access to the BD-ROM or the like.

On the other hand, when a normal end or an abnormal end occurs, the end is notified to the file I/O module 705 and the media playback module 702, and the file I/O module 705 and the media playback module 702 enter the regular state. During the regular state, when a request for file access or generation of JMF player instance is made by the Java application, the corresponding process is performed in accordance with the request.

Note that this is merely an example of software implementation for causing the file I/O module 705 and the media playback module 702 to enter the state in which they reject the request from the Java application. Not limited to this, for example, when a disc access or playback is requested by the Java application, the file I/O module 705 and the media playback module 702 may check whether or not the managed copy has been made, and when the check results in the affirmative, they may enter the state in which they reject the playback request from the Java application.

When, as described above, the file I/O module 705 and the media playback module 702 enter the state in which they reject the playback request from the Java application, the Java application cannot access the read-only BD, local storage, and recordable-type BD, although it can use data stored in the cache memory in the BD-J module.

The cache memory in the BD-J module is a cache that, when a certain title becomes the current title, stores an archive file specified by the cache management information in the BD-J object corresponding to the current title.

The archive file stored in the cache memory is effective while the certain title is the current title. The Java application can use the data or program included in the archive file stored in the cache memory, without accessing the BD-ROM or the local storage. Therefore the Java application can use the data in the archive file even during a period while the BD-ROM is ejected.

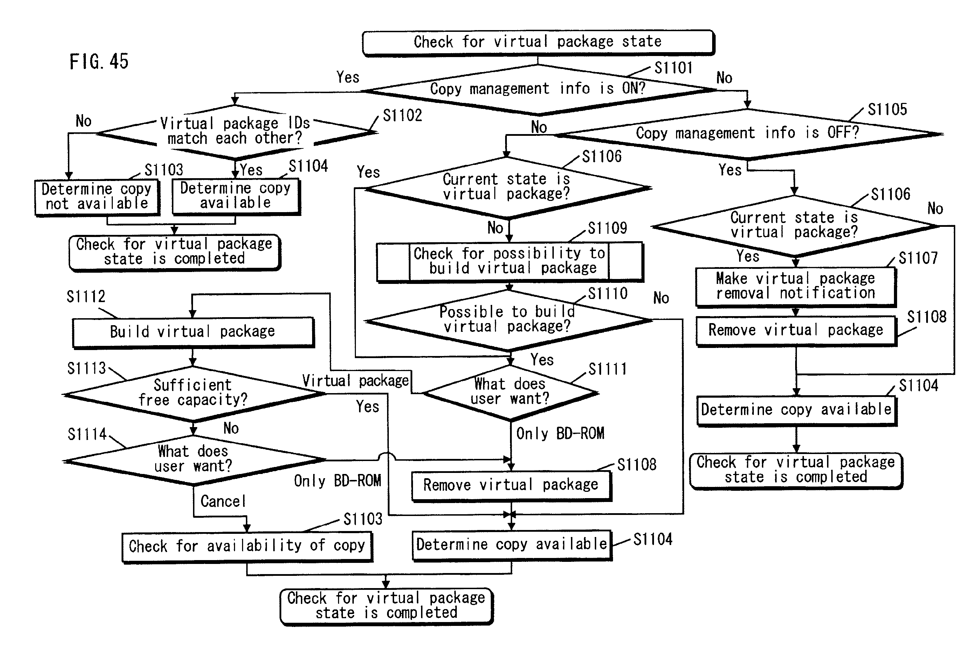

Fig. 45 is a flowchart of the procedure for checking the virtual package state during the managed copy. This flowchart shows a detailed procedure of step S1002 shown in Fig. 42.

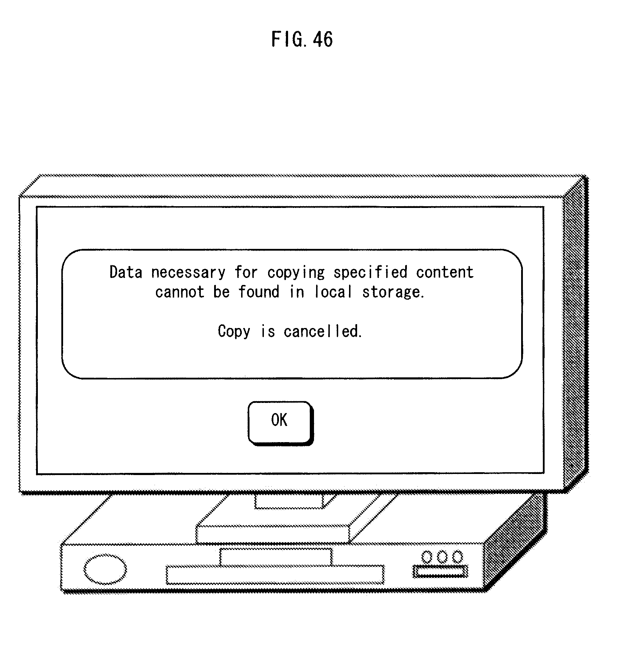

First, the copy management information is referenced and it is checked what copy permission is specified in the virtual package state (S1101). When the virtual package state is "On", namely when the copy of the virtual package is permitted, it is checked whether or not the virtual package ID written in the copy management information is identical with the current virtual package ID (S1102). When the IDs are identical, it is determined that the copy is available (S1104); and when the IDs are not identical, it is determined that the copy is not available (S1103). When it is determined that the copy is not available because the two virtual package IDs are not identical with each other, a notification may be sent to the user to notify that the data stored in the local storage does not correspond to a copy-available content (Fig. 46 shows one example of the notification).

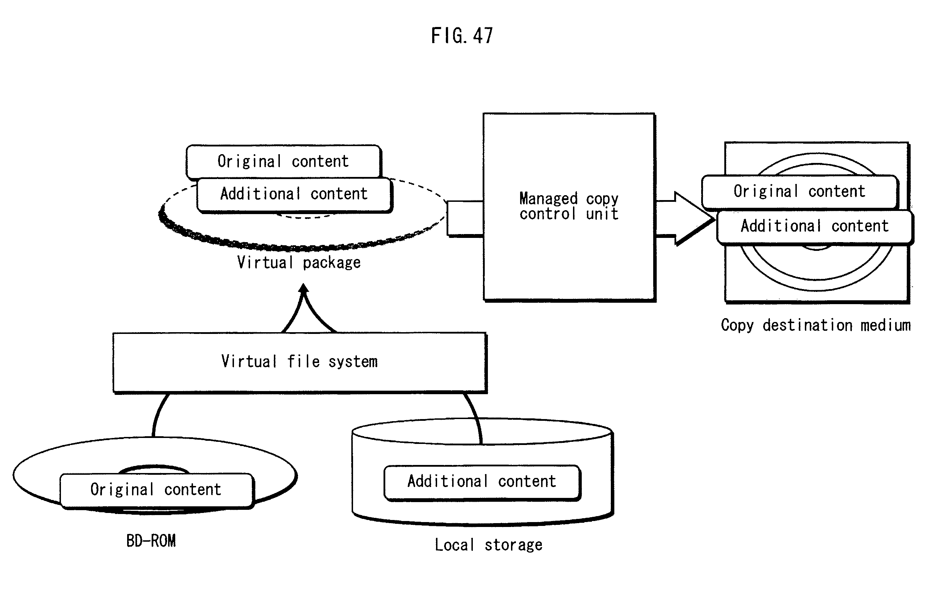

When it is determined that the copy of the virtual package is available because the virtual package ID written in the copy management information is identical with the current virtual package ID, data in a virtual file structure in the virtual package, in which the additional contents stored in the local storage have been merged with the original contents on the BD-ROM, is copied to the copy destination medium as it is (see Fig. 47). In this way, a virtual file structure in the virtual package is recorded onto the copy destination medium as an actual file structure. That is to say, data having been stored in two physically different media (BD-ROM and the local storage) are collected in one medium by the managed copy.

When the virtual package state in the copy management information is "Off", namely when the copy of the specified content in the virtual package is not permitted (S1105), first it is checked whether or not the current state is the virtual package state (S1106). When the current state is not the virtual package state, it is determined that the copy is available (S1104).

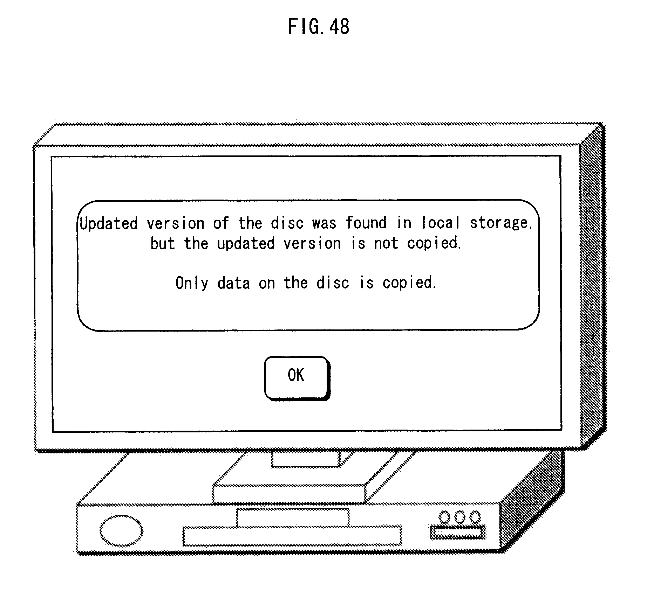

When the virtual package has already been built, a virtual package removal notification is made to the user (S1107), and the virtual package is removed (S1108). Fig. 48 shows one example of the notification to the user of the removal of the virtual package. As shown in Fig. 48, the screen shows a message that only the data on the disc is copied. After the removal of the virtual package, it is determined that the copy is available (S1104).

Note that the virtual package is removed temporarily in the managed copy. Accordingly, after the managed copy ends, the virtual package may be re-built. It is also possible to copy data from the original BD-ROM without removing the virtual package by directly reading the data from the original BD-ROM without involving the virtual file system, during the data copy.

When the virtual package state in the copy management information is "Both", namely when both the copy of the specified content in the virtual package and the copy of that in the BD-ROM are permitted (S1105), first it is checked whether or not the current state is the virtual package state (S1106). When the current state is not the virtual package state, it is judged whether or not it is possible to build the virtual package (S1109). When it is judged that it is not possible to build the virtual package (No in S1110), it is determined that the copy of only data on the BD-ROM is available (S 1104).

When the current state is the virtual package state (Yes in S1106), or when it is possible to build the virtual package although the current state is the BD-ROM state (Yes in S1110), the user is asked whether he/she wants to copy the virtual package or only data on the original BD-ROM (S1111).

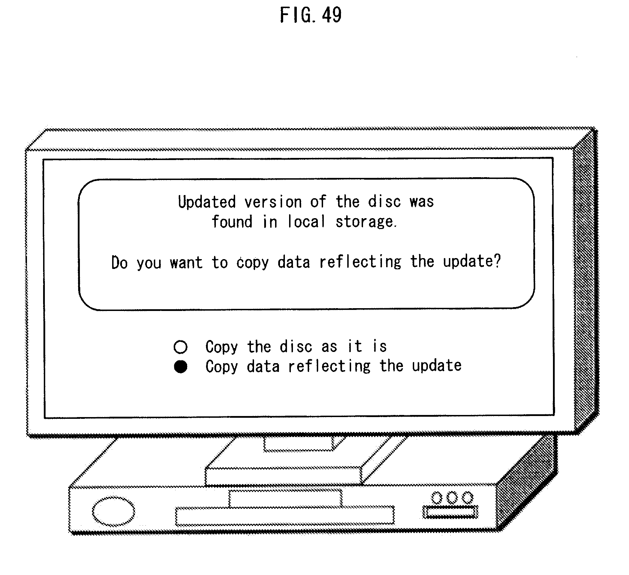

Fig. 49 shows one example of the question for the user to answer. In Fig. 49, the copy of the virtual package is represented as "copy data reflecting the update", and the copy of the original BD-ROM is represented as "copy the disc as it is". These expressions are merely one example, and the messages displayed may be expressed in various ways.

When the user selects to copy the original BD-ROM in step S1111, the virtual package is removed (S1108), and it is determined that the copy is available (S1104).

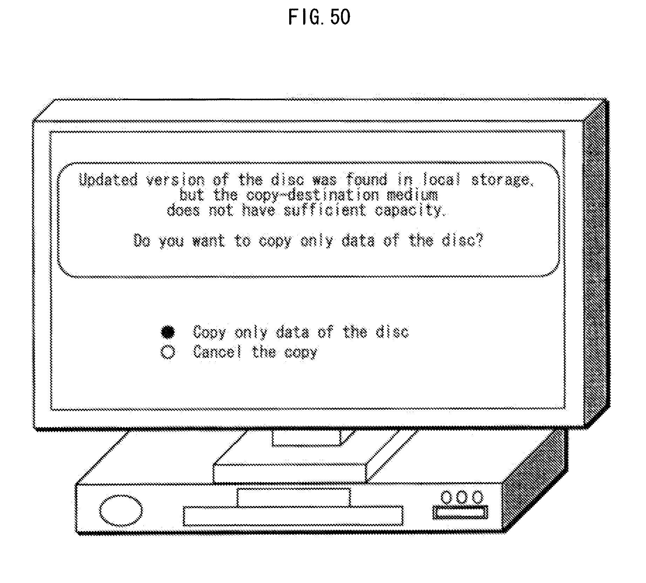

When the user selects to copy the virtual package in step S1111 when the virtual package has not been built, the virtual package is built (S1112). Following this, it is checked whether or not the copy destination medium has a sufficient free capacity required for the copy of the built virtual package (S1113). When it is checked that the copy destination medium has a sufficient free capacity, it is determined that the copy is available (S1104). When the copy destination medium does not have a sufficient free capacity to copy the virtual package, the user is asked whether he/she wants to cancel the copy or wants to copy the original BD-ROM instead of the virtual package (S1114). Fig. 50 shows one example of the question for the user to answer.

When the user selects to cancel the managed copy itself, it is determined that the copy is not available (S1103), and the virtual package state check process is ended. The control then proceeds to step S 1005 shown in Fig. 42. When the user selects to copy the original BD-ROM, the virtual package is removed (S1108), and it is determined that the copy of only data on the original BD-ROM is available (S1104).

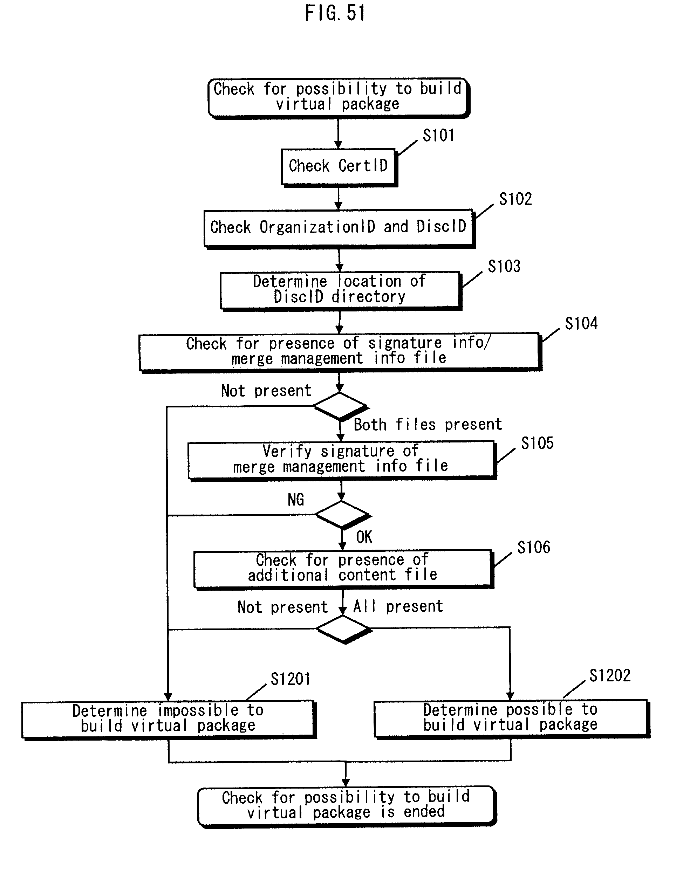

Fig. 51 is a flowchart of the judgment on whether or not it is possible to build the virtual package. This flowchart shows a detailed procedure of step S1109 shown in Fig. 45. Steps S101 through S106 shown in Fig. 51 are the same as those shown in Fig. 33.

When both the merge management information file and the signature information file exist in the DiscID directory corresponding to the inserted BD-ROM, and the authenticity of the merge management information file is successfully verified, and it is judged that all of the additional content data files specified in the merge management information exist, it is determined that it is possible to build the virtual package (S1202).

When it is judged NG in any of steps S104, S105, and S106, it is determined that it is impossible to build the virtual package (S1201).

As described above, according to the present embodiment, even in the case where the copy source data is scattered in a plurality of media, the managed copy is performed in the virtual file system which causes the copy source data to appear to exist in one medium. This makes it possible to copy the data scattered in a plurality of media by the managed copy, and collect the copied data in one medium.

### (Embodiment 5)

In Embodiment 4, mainly the Java application controls the managed copy. In contrast, Embodiment 5 discloses how the managed copy is performed with the BD-ROM without the Java application; namely, how the managed copy is performed with the BD-ROM that is structured only with the HDMV mode.

In Embodiment 4, a selection screen is prepared for the Java application on the BD-ROM to start the managed copy, while in Embodiment 5, a menu screen preliminarily prepared in the playback device is used to start the managed copy.

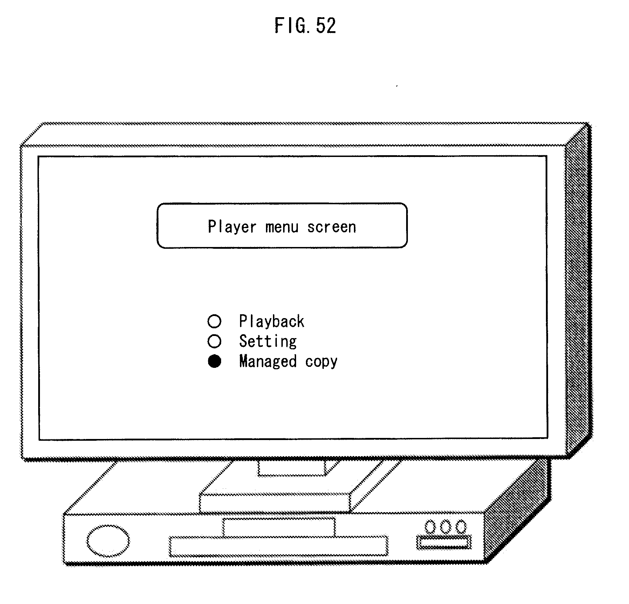

Fig. 52 shows one example of a managed copy start screen in Embodiment 5. When the user selects the managed copy on the menu screen of the playback device, the managed copy is started.

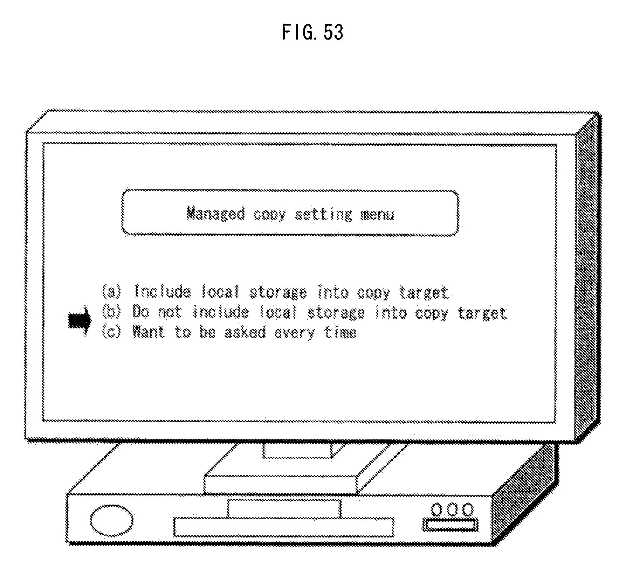

Fig. 53 shows one example of a managed copy setting screen in Embodiment 5. When the managed copy is to be controlled by the playback device side, a copy method that the user desires may be preliminarily registered in the playback device.

For example, when an additional content is stored in the local storage when the managed copy is started, and the user wants to copy the additional content as well, the user selects the item "(a)" on the screen of Fig. 53. When the user wants to copy only the data on the BD-ROM whether an additional content is stored in the local storage or not, the user selects the item "(b)" on the screen of Fig. 53. When the user wants to decide whether to use additional contents in the local storage every time he/she performs the managed copy, the user selects the item "(c)" on the screen of Fig. 53.

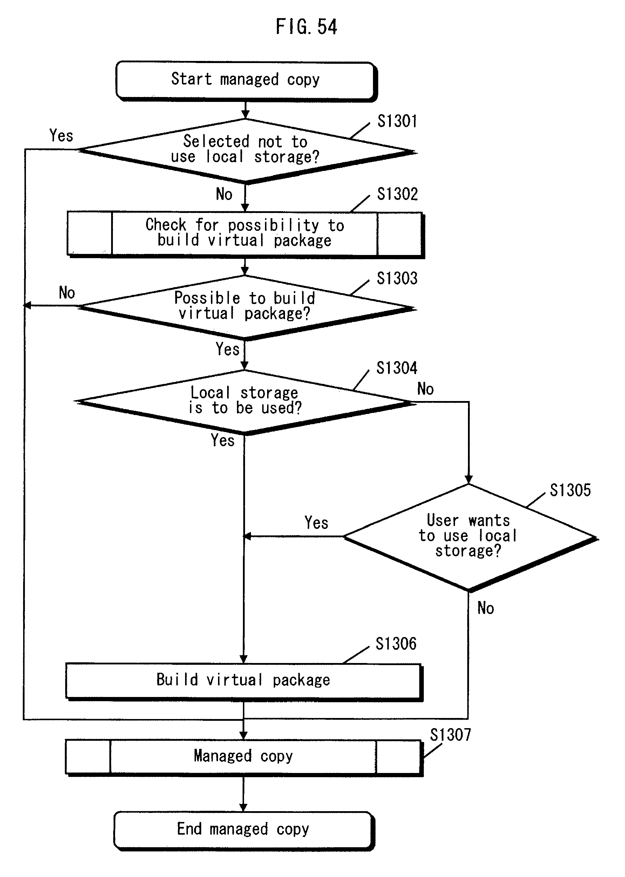

Fig. 54 is a flowchart showing the procedure of the managed copy in Embodiment 5. As has been described with reference to Fig. 52, when the user selects the managed copy on the menu screen of the playback device or the like, the managed copy is started.

When the user has preliminarily selected "not to use local storage" (S1301), the virtual package is not built, and the managed copy process is started to use only the BD-ROM (S1307).

In step S1307, a process similar to the process shown in Fig. 41 having been described in Embodiment 4 is performed. In the process of Embodiment 5, what is processed by the application in the process shown in Fig. 41 of Embodiment 4 is processed by the playback device side. The connection to the server is established with use of the URLs and protocols that have been embedded in the playback device preliminarily.

When it is judged in step S1301 that the user has not selected "no use of local storage", it is judged whether or not it is possible to build the virtual package (S1302). The process performed in step S1302 is similar to the process performed in step S1109 of Embodiment 4. When it is judged in step S1303 that it is impossible to build the virtual package, the managed copy process is started to use only the BD-ROM (S1307).

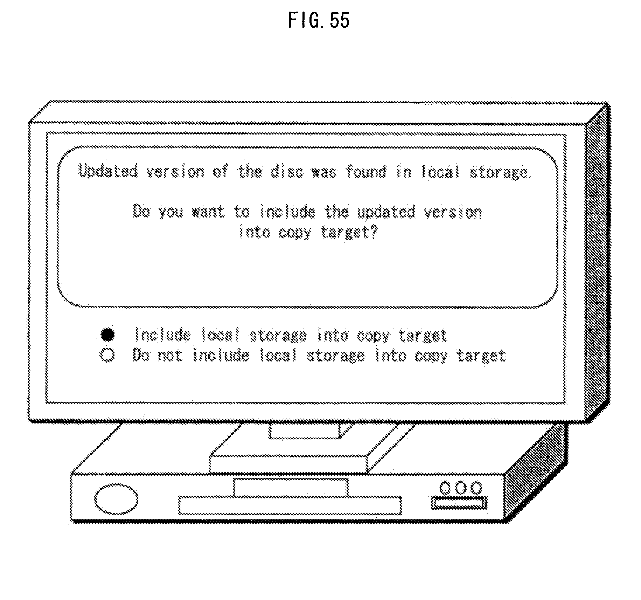

When it is judged in step S1303 that it is possible to build the virtual package when the user has preliminarily selected to use the local storage, the virtual package is built (S1306), and the managed copy process is started (S1307). When the user has selected to decide whether to use the local storage every time he/she performs the managed copy, the user is asked whether he/she wants to use the local storage (S1305). Fig. 55 shows one example of the screen asking whether the user wants to use the local storage.

When, in step S1305, the user selects not to use the local storage, the managed copy process is started to use only the BD-ROM (S1307). When, in step S1305, the user selects to use the local storage, the virtual package is built (S1306), and the managed copy process is started.

Note that, as described in Embodiment 4, the managed copy process performed in step S1307 includes the process of step S1111 (in which the user is asked again whether he/she wants to use the virtual package). In Embodiment 5, since the question has already been asked to the user, the process of step S1111 may be omitted. Of course, the question may be asked to the user again for confirmation.

As described above, according to the present embodiment, even in the case where a medium without the Java application is used, the virtual package is built in the playback device, and the managed copy is performed in the virtual file system which causes the copy source data to appear to exist in one medium. This makes it possible to copy the data scattered in a plurality of media by the managed copy, and collect the copied data in one medium.

### (Other variations)

Up to now, the playback device of the present invention has been described through several embodiments. However, the present invention is not limited to the above-described embodiments.

In those embodiments, the playback device has a playback function for playing back a recording medium. However, the playback device of the present invention is not limited to such a playback device. For example, the playback device of the present invention may be a recording/playback device having a recording function. In general, stationary-type playback devices, not portable-type playback devices, have a recording function, as well as a playback function. Such playback devices with a recording function can perform the copy by modifying the data format or encoding method (such copying is called "transcode"), as well as what is called "bit-by-bit copy" by which the bit stream is copied as it is.
In the above-described embodiments, Java is used as the programming language for the virtual machine. However, not limited to Java, other programming languages, such as B-Shell, Perl Script, and ECMA Script, which are used in UNIX^{™} OS or the like, are available.

Furthermore, although those embodiments describe the playback device that can play back the BD-ROM, the present invention also includes the case where the necessary data recorded on the BD-ROM described in the embodiments is recorded on a rewritable optical recording medium. It should be noted that the effects produced by the structures of those embodiments are produced as well in that case.

### [Industrial Applicability]

The playback device of the present invention can be used as a technology for maintaining the standard compatibility when a partial copy is performed by using a technology called managed copy for recording image data from a recording medium to another medium, and especially useful for the movie industry and consumer device industry pertaining to production of image data (content).

### [Reference Signs List]

- 101: playback device
- 102: remote control
- 103: television
- 104: removable medium
- 105: BD-ROM
- 106: external disc drive
- 401: BD-ROM drive
- 402: reading control unit
- 403: demultiplexer
- 404: video decoder
- 405: video plane
- 406: audio decoder
- 407: image memory
- 408: image plane
- 409: image decoder
- 410: adder
- 411: static scenario memory
- 412: dynamic scenario memory
- 413: HDMV module
- 414: BD-J module
- 415: UO detection module
- 416: mode management module
- 417: dispatcher
- 418: rendering engine
- 419: writing control unit
- 420: AV playback library
- 421: network interface
- 422: local storage
- 423: managed copy control unit
- 424: virtual file system
- 601: serial number reading unit
- 602: media ID reading unit
- 603: media state management unit
- 604: copy execution unit
- 605: copy state notifying unit
- 606: copy progress management unit
- 607: nonce generating/writing unit
- 608: key information writing unit
- 609: mapping data processing unit
- 610: free capacity judging unit
- 611: copy source file information preserving unit
- 612: copy source file information reading unit
- 613: authentication unit
- 620: database file generating unit
- 701: Java application
- 702: media playback module
- 703: virtual file system management module
- 704: managed copy module
- 705: file I/O module
- 706: network module
- 707: application manager
- 801: copy source disc
- 802: copy destination disc

## Claims

1. A playback device for copying files from a first recording medium to a second recording medium, the first recording medium storing an index table file, real data files associated with titles defined in the index table file, and a partial-copy index table file that defines one or more titles in association with a partial set of the real data files, the playback device comprising:
a storage unit storing file mapping information which indicates predetermined file names of the partial-copy index table file and the partial set of the real data files, the predetermined file names prepared for use in the second recording medium;
a mapping data processing unit operable, when part of files recorded on the first recording medium is to be copied, to change file names of the partial-copy index table file and the partial set of the real data files to the predetermined file names indicated by the file mapping information; and
a copy execution unit operable to copy the partial-copy index table file and the partial set of the real data files to the second recording medium, by attaching thereto the respective predetermined file names prepared for use in the second recording medium.

2. The playback device of Claim 1, wherein
the index table file is recorded on the first recording medium with a fixed file name that is to be read first,
the partial-copy index table file is recorded on the first recording medium with a file name that is different from the fixed file name,
the file mapping information indicates the fixed file name as a file name of the partial-copy index table file for use in the second recording medium, and
the copy execution unit copies the partial-copy index table file from the first recording medium to the second recording medium by attaching thereto the fixed file name that is to be read first.

3. The playback device of Claim 2 further comprising:
a network connection unit operable to obtain copy management information including the file mapping information from an external server; and
a selecting unit operable to select either a copy of all or part of files on the first recording medium, wherein
the storage unit stores the copy management information obtained from the external server, and
the mapping data processing unit, when the selecting unit selects the copy of part of the files, performs the process of changing the file names in accordance with the file mapping information.

4. The playback device of Claim 3 further comprising:
an application executing unit operable to control execution of the application in accordance with application management information recorded on the first recording medium; and
a playback control unit operable to control playback of a digital stream in accordance with an instruction from the application, wherein
the digital stream is played back in conjunction with the application on the first recording medium.

5. The playback device of Claim 1 further comprising:
a virtual file system operable to generate package information which causes the files recorded on the first recording medium and files stored in a local storage to be read as one package, by combining thereof together in accordance with merge management information, wherein
when the merge management information corresponding to the first recording medium exists in the local storage, the virtual file system checks whether or not the merge management information is authentic, and generates the package information after confirming that the merge management information is authentic, and
the copy execution unit generates a combined file by combining the files recorded on the first recording medium with the files stored in the local storage in accordance with the generated package information, and copies the combined file to the second recording medium.

6. The playback device of Claim 5 further comprising:
a notification unit which, when the merge management information corresponding to the first recording medium exists in the local storage and it has been confirmed that the merge management information is authentic, notifies, before an execution of a copy, the user that a file corresponding to the first recording medium exists.

7. The playback device of Claim 6 further comprising:
a receiving unit operable to receive, from the user, a selection of whether or not to include a file stored in the local storage into copy-target files, wherein
when, after the notification by the notification unit, the receiving unit receives from the user the selection to include the file stored in the local storage into the copy-target files, the virtual file system generates package information in accordance with the merge management information, and the copy execution unit generates a combined file by combining the files recorded on the first recording medium with the files stored in the local storage in accordance with the generated package information, and copies the combined file to the second recording medium, and
when the receiving unit receives from the user the selection not to include the file stored in the local storage into the copy-target files, the copy execution unit copies only the files recorded on the first recording medium to the second recording medium.

8. The playback device of Claim 5, wherein
the copy execution unit copies only the files recorded on the first recording medium to the second recording medium
when
(i) an amount of data contained in the combined file, which is generated by combining the files recorded on the first recording medium with the files stored in the local storage in accordance with the package information, exceeds a free capacity of the second recording medium which is a copy destination, and
(ii) an amount of data contained in the files recorded on the first recording medium is equal to or less than the free capacity of the second recording medium.

9. The playback device of Claim 5, wherein
the local storage stores copy management information that includes the merge management information and information indicating whether or not to permit a copy that uses a file stored in the local storage, and
the copy execution unit copies only the files recorded on the first recording medium to the second recording medium when the information included in the copy management information indicates not to permit the copy that uses a file stored in the local storage.

10. The playback device of Claim 9 further comprising
a notification unit operable to notify the user that the file stored in the local storage is not copied when the information included in the copy management information indicates not to permit the copy that uses a file stored in the local storage, even when the merge management information corresponding to the first recording medium exists in the second recording medium and it has been confirmed that the merge management information is authentic.

11. The playback device of Claim 5, wherein
the virtual file system performs, as the check on whether or not the merge management information is authentic, a check on whether or not the merge management information has been tampered with, and a check on whether or not the file specified by the merge management information exists in the local storage.

12. A playback device for copying copy-target files to a second recording medium, from either a first recording medium or a local storage that stores an index table file, real data files associated with titles defined in the index table file, and a partial-copy index table file defining titles in association with a partial set of the real data files, the playback device comprising:
the local storage storing file mapping information which indicates predetermined file names of the partial-copy index table file and the partial set of the real data files, the predetermined file names prepared for use in the second recording medium;
a mapping data processing unit operable, when part of copy-available files is to be copied, to change file names of the partial-copy index table file and the partial set of the real data files to the predetermined file names indicated by the file mapping information;
an authentication unit operable, when the copy-target files are files stored in the local storage, to check authenticity of the copy-target files stored in the local storage; and
a copy execution unit operable to copy (i) the partial-copy index table file, (ii) files recorded on the first recording medium among the partial set of the real data files, and (iii) files whose authenticity has been confirmed by the authentication unit, to the second recording medium, by attaching thereto the respective predetermined file names.

13. The playback device of Claim 12, wherein
the local storage further stores digest values of the respective files stored therein, and
the authentication unit checks authenticity of the files stored in the local storage, based on the digest values stored therein.

14. A playback device for copying copy-target files to a second recording medium, the copy-target files being among an index table file, real data files associated with titles defined in the index table file, and a partial-copy index table file that defines titles in association with a partial set of the real data files, the playback device comprising:
a storage unit storing copy management information which indicates file names on the first recording medium and predetermined file names for use in the second recording medium, of the partial-copy index table file and the partial set of the real data files that are copy-target files in a case of copying part of copy-available files;
a judging unit operable to judge whether or not the copy-target files indicated by the copy management information exist in the first recording medium;
a file generating unit operable to generate one or more files having been judged by the judging unit as not existing in the first recording medium;
a mapping data processing unit operable, when a partial set of the copy-available files is to be copied, to change file names of copy-target files existing on the first recording medium and copy-target files generated by the file generating unit to the predetermined file names indicated by the copy management information; and
a copy execution unit operable to copy the partial-copy index table file and the partial set of the real data files to the second recording medium, by attaching thereto the respective predetermined file names.

15. The playback device of Claim 14, wherein
when there are one or more files judged as not existing in the first recording medium by the judging unit, the file generating unit uses, as the one or more files not existing in the first recording medium, files having been preliminarily stored in the playback device.
